# EUROPEAN PATENT SPECIFICATION

(11) **EP 1 497 386 B1**
(45) Date of publication and mention of the grant of the patent: **14.11.2007**
(21) Application number: 03719823.1
(22) Date of filing: 16.04.2003
(51) Int. Cl.: C09D 175/04, C08G 18/08, B41M 5/00

(54) **WATER RESISTANT INK JET RECORDABLE SUBSTRATE**
WASSERBESTÄNDIGES MIT TINTENSTRAHLDRUCKER BEDRUCKBARES SUBSTRAT
SUBSTRAT RESISTANT A L'EAU, IMPRIMABLE AUX JETS D'ENCRE

(30) Priority: 19.04.2002 US 373957 P; 11.04.2003 US 411311
(43) Date of publication of application: 19.01.2005
(73) Proprietor: PPG Industries Ohio, Inc., Cleveland, OH 44111 (US)
(72) Inventor: PARRINELLO, Luciano, M., Allison Park, PA 15101 (US); NOWAKOWSKI, Peter, M., Gibsonia, PA 15044 (US)
(74) Representative: Polypatent
(86) International application number: PCT/US2003/011964
(87) International publication number: WO 2003/089533

(56) References cited:
- EP-A- 1 048 479
- EP-A- 1 114 734
- EP-A- 1 180 436

## Description

The present invention is directed to an ink jet recordable substrate. In particular, the present invention relates to a water-resistant coating composition for an ink jet recordable substrate, a method for preparing the coating composition and a method of applying said coating composition to produce a water-resistant ink jet recordable substrate.

It is known in the art to employ various paper treatment methods to improve the quality of ink jet prints thereon. However, problems have been experienced when the imaged-sheet comes into contact with water; the image may migrate through the sheet to the other side. In some instances, the show-through of the image on the back side of the paper has more ink than the front side. Further, paper treatment methods which improve inter-color bleed problems in color ink jet images may heighten the severity of show-through of the image.

It is also known in the art to size cellulosic-based paper with sizing components for the purpose of reducing the penetration of liquids into the substrate. "Internal sizing" may include the introduction of a material into the pulp during the paper making operation. "Surface sizing" may include the application of dispersions of film-forming substances such as converted starches, gums, and modified polymers to previously formed paper. When used to print with an ink jet printer containing predominantly water based inks, internal and surface sized papers often yield imaged papers which curl into tubes.

Thus, it would be desirable to develop an ink jet recordable substrate that does not exhibit the aforementioned problems.

U.S. Patent No. 5,709,976 discloses a method for coating a paper substrate with a hydrophobic barrier layer and an image- receiving layer. U.S. Patent No. 6,140,412 discloses a method for coating paper with an aqueous cationic polyurethane resin solution.

In addition to paper printing substrates, polyolefin based printing substrates in the form of a microporous material sheet were developed and are known in the art. For example, U.S. Patents 4,861,644 and 5,196,262 disclose microporous material sheets which include a matrix of linear ultrahigh molecular weight polyolefin, a large proportion of finely divided water-insoluble siliceous filler, and interconnecting pores. However, inks used for inkjet printing may coalesce on the surface of the polyolefin based printing substrates.

U.S. Patent No. 6,025,068 discloses a method for coating a microporous polyolefin substrate with a composition including a binder dissolved or dispersed in a volatile aqueous liquid medium. The binder includes a film-forming organic polymer of a water-soluble poly(ethylene oxide) and a water-soluble or water-dispersible crosslinkable urethane-acrylate hybrid polymer. However, ink jet recordings on these coated substrates lack the sharpness and vibrancy which is desired.

Japanese Patent (JP) 2001-184881 discloses a coating composition that includes a nonionic or anionic polyurethane and the reaction product of a monomeric secondary amine and epichlorohydrin. However, when subsequently contacted with water, the monomeric amine adduct can solubilize, which may result in a blurred image.

Further, United States Patent 6,020,058 discloses an acrylic composition and United States Patent 6,025,068 discloses a urethane-acrylic co-polymer.

Moreover, patent application having U.S. Serial No. 60/309,348 filed August 1, 2001, discloses a two-component water-resistant coating composition for use with a microporous substrate; and patent application having U.S. Serial No. 60/317,113 filed September 5. 2001, discloses a method of processing a coated microporous substrate.

EP-A-1 180 436 discloses a composition for an ink-receiving layer comprising (A) an aqueous polyurethane resin having a polycarbonate chain; (B) at least one pigment selected from the group consisting of silica, alumina, calcium carbonate and clay; and at least one of (C) a phenolic antioxidant and(D) a hindered amine ultraviolet absorber.

Thus, there is a need in the art for an ink jet recordable substrate that is durable, water resistant and able to record sharp images when an ink jet printing ink is applied thereto.

### SUMMARY OF THE INVENTION

The present invention is directed to a water-resistant coating composition for ink jet recordable substrates. The water-resistant coating composition includes:
(a) an aqueous polyurethane dispersion;
(b) an aqueous solution of a cationic nitrogen-containing polymeric dye fixative compound; and
(c) an acrylic polymer,
wherein the coating composition has a pH of 7 or less.

The present invention is also directed to a method of coating an ink jet recordable substrate in which an ink jet recordable substrate is provided and the above-defined coating composition is applied to the substrate.

The present invention is further directed to an ink jet recordable substrate which includes a substrate having at least one side, and to at least one side of the substrate is applied a coating layer of the above described coating composition.

### DETAILED DESCRIPTION OF THE INVENTION

Unless otherwise indicated, all numbers or expressions referring to quantities of ingredients, reaction conditions, etc. used herein are to be understood as modified in all instances by the term "about."

Unless otherwise indicated, all references to (meth)acrylic, (meth)acrylate and (meth)acrylamide monomers is meant to include both the methacrylic and acrylic species.

Any polyurethane that may be dispersible in water is suitable for use in the present coating composition. Such polyurethanes include anionic, cationic and nonionic polyurethanes. The co-mixing of anionic polymers and cationic polymers often produces a polysalt which is typically insoluble in water and other solvents. In the present invention, it has been discovered that an anionic polyurethane dispersion may be combined with a cationic nitrogen-containing polymer to form a stable aqueous dispersion which can be useful as a coating composition for an ink jet recordable substrate.

An aqueous dispersion of polyurethane resin comprising particles of a polyurethane polymer dispersed in an aqueous medium can be used in the present invention.

The polyurethane for use in the present invention can be prepared by a variety of methods known in the art. For example, a polyisocyanate can be reacted with a polyol to form a prepolymer, such as an isocyanate-terminated prepolymer. As used herein and the claims, the term "polyisocyanate" refers to a compound with more than one isocyanate group, such as a diisocyanate. Non-limiting examples of suitable diisocyanates for use in the present invention include toluene diisocyanate, hexamethylene diisocyanate, isophorone diisocyanate and dicyclohexyl methane diisocyanate. Non-limiting examples of suitable three or more functional isocyanates include the reaction products of diisocyanates with polyols such as trimethylol-propane, glycerol and pentaerythritol. A suitable polyisocyanate for use in the present invention can include but is not limited to Desmodur which is commercially available from Bayer.

As used herein and in the claims, the term "polyol" refers to a compound with more than one hydroxyl group. Non-limiting examples of suitable polyols for use in the present invention include polyols such as those from which the polyisocyanate can be prepared, polyester polyols and polyether polyols.

The reaction of the polyisocyanate and polyol can be carried out in the presence of an organic solvent. Suitable solvents can include but are not limited to n-methyl pyrrolidone, tetrahydrofuran or glycol ether. -

In an embodiment, the prepolymer can be reacted with a di-hydroxyl compound having an acid group, such as dimethylol propionic acid, to produce a polyurethane with at least one pendant acid group. The acid group can include a carboxylic acid group or a sulfonic acid group. The polyurethane having a pendant acid group can then be reacted with a base to produce an anionic polyurethane. The anionic polyurethane dispersions of the present invention generally can be dispersed in a base which ionizes the acidic groups of the polymer and stabilizes the dispersion. The base can be selected from the group consisting of an inorganic base, ammonia, amine and mixtures thereof.

Non-limiting examples of suitable anionic polyurethanes for use in the present invention can include anionic polyurethanes based on aromatic polyether polyurethanes, aliphatic polyether polyurethanes, aromatic polyester polyurethanes, aliphatic polyester polyurethanes, aromatic polycaprolactam polyurethanes, and/or aliphatic polycaprolactam polyurethanes. Examples of suitable anionic polyurethane dispersions that can be used in the present invention can include but are not limited to those marketed under the trade name WitcoBond® which are commercially available from Crompton Corporation, Greenwich, Connecticut.

A cationic polyurethane dispersion for use in the present invention can be prepared by a variety of methods known in the art. For example, United States Patent 3,470,310 discloses a method which includes the preparation of water dispersions of polyurethanes which contain salt-type groups bonded into the polyurethane. United States Patent 3,873,484 discloses aqueous dispersions of polyurethanes prepared from a quaternized polyurethane prepolymer. United States Patent 6,221,954 discloses a method for preparing a polyurethane prepolymer in which a N-monoalkanol tertiary amine is reacted with an alkylene oxide in the presence of a strong acid. The relevant portions of these patents are herein incorporated by reference.

In an embodiment, the prepolymer can be reacted with a di-hydroxyl compound having an amine group, such as a secondary or tertiary amine, to produce a polyurethane with at least one pendant amine group. Non-limiting examples of a di-hydroxyl compound having an amine group can include polyamines such as ethylene diamine, isophorone diamine and diethylene triamine. The polyurethane having a pendant amine group can then be reacted with an acid to produce a cationic polyurethane.

Suitable cationic polyurethanes for use in the present invention can include but is not limited to those marketed under the trade name WitcoBond (i.e., W213, W215 and X051) which are available from Crompton Corporation, Greenwich, Connecticut.

In another embodiment of the present invention, the prepolymer can be reacted with a diol having a polyalkylene oxide chain, to produce a polyurethane backbone with a polyalkylene glycol pendant chain. The polyurethane having a polyalkylene glycol pendant chain can be reduced with water to produce a nonionic polyurethane.

Suitable nonionic polyurethanes for use in the present invention can include but is not limited to those marketed under the trade name WitcoBond (i.e., W320) which are available from Crompton Corporation, Greenwich, Connecticut.

In a non-limiting embodiment, a vinyl or ethylenic unsaturated isocyanate prepolymer or vinyl or ethylenic unsaturated polyurethane can be reacted with a vinyl or ethylenic unsaturated acid species, such as acrylic acid or methacrylic acid, in a free radical synthesis to form a carboxylic acid pendant polyurethane. The acid pendant polyurethane can be reacted with a base, such as those aforementioned, to form an anionic polyurethane.

Further, the prepolymer can be dispersed in water in the presence of a base and then chain extended by adding a polyamine. In a non-limiting embodiment, the prepolymer can be chain-extended in an organic solvent solution and the resulting polyurethane polymer can be dispersed in water in the presence of a base.

In alternate non-limiting embodiments, the aqueous polyurethane dispersion can contain up to 70 wt.%, or up to 65 wt.%, or up to 60 wt.%, or up to 50 wt.% of the polyurethane. The aqueous polyurethane dispersion can include at least 1 wt.%, or at least 5 wt.%, or at least 10 wt.%, or at least 20 wt.% polyurethane. The amount of polyurethane in the aqueous polyurethane dispersion can vary widely. However, the amount should not be so high as to cause the dispersion itself or the mixture with the nitrogen-containing polymer to be unstable; and the amount should not be so low that the coating composition does not provide sufficient water and rub resistance or that the dispersion itself becomes unstable. The polyurethane can be present in the aqueous polyurethane dispersion in any range of values inclusive of those stated above.

In addition to an aqueous polyurethane dispersion, a coating composition of the present invention, includes an aqueous solution of a cationic nitrogen-containing polymeric dye fixative compound. In a non-limiting embodiment, the aqueous solution of a cationic nitrogen-containing polymer suitable for use in the present invention can have a pH of 7 or less, or a pH of 6 or less, or 5 or less, to ensure that at least a portion of the nitrogen atoms carry at least a portion of a cationic charge. In a further non-limiting embodiment, the coating composition of the present invention can also have a pH 7 or less, or 6 or less, or 5 or less.

Any nitrogen-containing polymer in which at least a portion of the nitrogen atoms carry at least a portion of a cationic charge at a pH within the aforementioned range can be useful in the present invention. Non-limiting examples of suitable cationic nitrogen-containing polymers for use as a dye fixative include but are not limited to polymers that include one or more monomer residues derived from one or more of the following nitrogen-containing monomers: 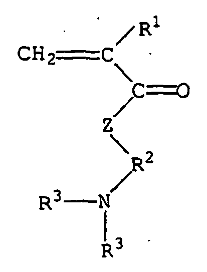 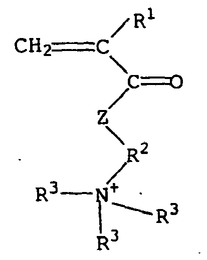 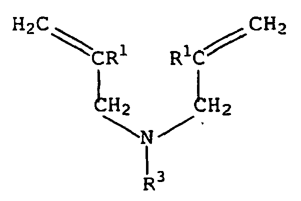 and 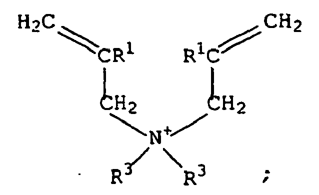 where R¹ represents independently for each occurrence H or C₁ to C₃ aliphatic; R² represents independently for each occurrence a divalent linking group selected from C₂ to C₂₀ aliphatic hydrocarbon, polyethylene glycol and polypropylene glycol; R³ represents independently for each occurrence H, C₁ to C₂₂ aliphatic hydrocarbon or a residue from the reaction of the nitrogen with epichlorohydrin; Z is selected from -O- or -NR⁴-, wherein R⁴ represents H or CH₃; and X represents a halide or methylsulfate.

Non-limiting examples of suitable cationic nitrogen-containing monomers for use in the present invention can include but are not limited to dimethyl aminoethyl (meth)acrylate, (meth)acryloyloxyethyl trimethyl ammonium halides, (meth)acryloyloxyethyl trimethyl ammonium methylsulfate, dimethyl aminopropyl (meth)acrylamide, (meth)acrylamidopropyl trimethyl ammonium halides, (meth)acrylamidopropyl trimethyl ammonium methylsulfate, diallyl amine, methyl diallyl amine, and diallyl dimethyl ammonium halides.

In a non-limiting embodiment, the cationic nitrogen-containing polymers can contain one or more additional monomer residues. An additional monomer residue can be selected from any polymerizable ethylenically unsaturated monomer that when copolymerized with a nitrogen-containing monomer, can result in a polymer that is at least partially soluble in water. As used herein and in the claims, "partially soluble" means at least 0.1 gram of the polymer can be dissolvable in water when 10 grams of the polymer is added to 1 liter of water and mixed for 24 hours.

Non-limiting examples of monomers that can be copolymerized with the nitrogen-containing monomers include but are not limited to (meth)acrylamide, n-alkyl (meth)acrylamides, (meth)acrylic acid, alkyl esters of (meth)acrylate, glycol esters of (meth)acrylic acid, polyethylene glycol esters of (meth)acrylic acid, hdroxyalkyl (meth)acrylates, itaconic acid, alkyl ethers of itaconic acid, maleic acid, mono- and di-alkyl esters of maleic acid, maleic anhydride, maleimide, aconitic acid, alkyl esters of aconitic acid, allyl alcohol and alkyl ethers of allyl alcohol.

In a further non-limiting embodiment, a nitrogen-containing polymer for use in the present invention, can be a homopolymer of a nitrogen-containing monomer or it can be a copolymer of one or more nitrogen-containing monomers. A nitrogen-containing polymer can also be a copolymer of one or more polymerizable ethylenically unsaturated monomers, or one or more nitrogen-containing monomers, or mixtures thereof. In alternate non-limiting embodiments, when a nitrogen-containing polymer includes one or more other polymerizable ethylenically unsaturated comonomers, the nitrogen-containing polymer can include not more than 70 mol%, or not more than 50 mol%, or not more than 25 mol%, or not more than 10 mol% of the nitrogen-containing monomer. The amount of nitrogen-containing monomer used can depend upon the polyurethane component used in the present coating composition. When the amount of the nitrogen-containing monomer in the nitrogen-containing polymer is too high, the resulting mixture of the nitrogen-containing polymer and polyurethane dispersion can be unstable. The application of an unstable mixture to an ink jet recordable substrate can be difficult.

When the nitrogen-containing polymer includes one or more other polymerizable ethylenically unsaturated comonomers, the nitrogen-containing polymer can include at least 0.1 mol%, or at least 1.0 mol%, or at least 2.5 mol%, or at least 5.0 mol% of the nitrogen-containing monomer. When the amount of nitrogen-containing monomer in the nitrogen-containing polymer is too low, the nitrogen-containing polymer may not provide adequate dye fixative properties and a recorded ink image on the coated substrate can lack the desired water and rub fastness properties.

A nitrogen-containing monomer may be present in the nitrogen-containing polymer in any range of values inclusive of those stated above. The one or more other polymerizable ethylenically unsaturated monomers can be present in an amount sufficient to bring the total percentage to 100 mol%.

In a non-limiting embodiment of the present invention, a nitrogen-containing polymer can comprise an aqueous solution. In this embodiment, the aqueous solution can include at least 5 wt.%, or at least 10 wt.%, or at least 15 wt.% of the nitrogen-containing polymer and not more than 50 wt.%, or not more than 45 wt.%, or not more than 40 wt.% of the nitrogen-containing polymer. When the concentration of the nitrogen-containing polymer is too low it may not be economical for use in commercial applications and can be too dilute to provide optimum ratios with the polyurethane component. When the concentration is too high, the viscosity of the solution can increase and result in handling difficulties in a commercial environment. In a non-limiting embodiment, the nitrogen-containing polymer can include a solution of polyamide amines reacted with epichlorohydrin, available under the trade name CinFix by Stockhausen GmbH & Co. KG, Krefeld, Germany.

The coating composition of the present invention includes an acrylic polymer. In a non-limiting embodiment, the acrylic polymer can be selected from anionic, cationic and nonionic acrylic polymers. In a non-limiting embodiment, the acrylic polymer can include a cationic acrylic polymer. Non-limiting examples of suitable cationic acrylic polymers can include polyacrylates, polymethacrylates, polyacrylonitriles and polymers having monomer types selected from the group consisting of acrylonitrile, acrylic acid, acrylamide and mixtures thereof.

The cationic acrylic polymer can be prepared by a variety of methods known in the art. In a non-limiting embodiment of the present invention, a cationic acrylic polymer can be synthesized via a free radical solution polymerization from monomer types butyl acrylate, methyl methacrylate and 2-(tert-butylamino)ethyl methoacrylate. The molar equivalent of butyl acrylate can be from 0.10 to 0.95, or from 0.15 to 0.75; the molar equivalent of methyl methacrylate can be from 0.10 to 0.85, or from 0.15 to 0.70; and the molar equivalent of 2-(tert-butylamino)ethyl methyacrylate can be from 0.10 to 0.25, or from 0.12 to 0.20. The reaction mixture can be treated with acid such that the pH is within a range of from 4.0 to 7.0. The mixture then can be diluted with water and solvent stripped. Non-limiting examples of suitable acids for use in the treatment step can include any acid which can function as a solubilizing or dispersing agent to produce a stable dispersion of a cationic polymer. Non-limiting examples of suitable solvents for use in the stripping process can include isopropanol and methyisobutyl ketone (MIBK).

In a non-limiting embodiment of the present invention, the molar equivalent of the butyl acrylate, methyl methacrylate and 2-(tert-butylamino)ethyl methacrylate, can be 0.219 to 0.621 to 0.160, respectively.

In another non-limiting embodiment, the cationic acrylic polymer for use in the present invention can have a number average molecular weight of from 1500 to 8150, or from 2900 to 7125.

The ink jet recordable substrate coating composition of the present invention includes a mixture of an aqueous solution of a nitrogen-containing polymer, an aqueous polyurethane dispersion, and an acrylic polymer. In a non-limiting embodiment, the mixture can include from 20 wt.% to 75 wt.%, or from 25 wt.% to 70 wt.%, or from 30 wt.% to 60 wt.% of the aqueous polyurethane dispersion. The mixture can also include from 5 wt.% to 75 wt.%, or from 15 wt.% to 70 wt.%, or from 30 wt.% to 65 wt.% of an aqueous solution of the nitrogen-containing polymer. The mixture can also include from 1 wt.% to 75 wt.%, or from 20 wt.% to 60 wt.%, or from 25 wt.% to 50 wt.% of an acrylic polymer. The weight percentages are based on the total weight of the ink jet recordable substrate coating composition.

In a non-limiting embodiment of the present invention, water can be added to the mixture of nitrogen-containing polymer, polyurethane and acrylic polymer. When water is added to the mixture, the resulting ink recordable substrate coating composition can have a total resin solids of from 5 wt.% to 35 wt.%, or from 5 wt.% to 20 wt.%, or from 5 wt.% to 15 wt.% based on the total weight of the ink recordable substrate coating composition. A total resin solids that is too high, can cause the viscosity of the coating composition to increase such that the resulting penetration of the coating composition to the substrate can be less than desired. A total resin solids that is too low, can cause the viscosity of the coating composition to decrease such that the resulting penetration of the coating to the substrate can be less than desired. In a non-limiting embodiment the viscosity of the coating composition can be less than 50 Pas (500 cps) or less than 40 Pas (400 cps) and at least 1 Pas (10 cps) or at least 2.5 Pas (25 cps) when measured using a Brookfield viscometer at 25°C.

In a non-limiting embodiment, the coating composition of the present invention can also include other additives typically known in the art. Non-limiting examples of suitable additives can include surfactants, such as nonionic, cationic, anionic, amphoteric and zwiterionic surfactants; rheology modifiers, such as polyvinyl alcohols, polyvinyl pyrrolidones, polyethylene oxides, polyacrylamides, natural and synthetic gums; biocides, such as a blend of 5-chloro-2-methyl-4-isothiazoline-3-one and 2-methyl-4-isothiazolin-3-one available commercially by the trade name Kathon, from Rohm and Haas Co., 2-hydroxypropylmethane thiosulfonate, and dithiocarbamates; and coupling agents, such as titanium, silane-type, trisodium pyrophosphate.

The pH of the coating composition of the present invention can be less than 7, or less than 6, or less than 5. It is believed that when the pH is outside of these ranges, the cationic polymeric dye fixative compound may not carry a sufficient cationic charge to perform its intended function. Further, it is believed that on certain substrates, the wetting action of the coating composition can be improved when the pH is within the aforementioned ranges. In a non-limiting embodiment, for commercial applications, the coating composition can have pH greater-than 2.

The present invention is also directed to a method of preparing the ink jet recordable substrate coating composition of the present invention. In a non-limiting embodiment, the method can include combining an aqueous solution of a nitrogen-containing polymer, an aqueous polyurethane dispersion, and an acrylic polymer. In a non-limiting embodiment, sufficient mixing can be maintained during the addition step to produce a homogeneous mixture.

The present invention is further directed to a method of coating an ihk jet recordable substrate. In a non-limiting embodiment, the method can include the steps of:
(a) providing an ink recordable substrate having at least one side;
(b) providing the coating composition described above; and
(c) applying the coating composition to at least one side of the ink recordable substrate.

Any ink jet recordable substrate known in the art can be used in the present invention. As a non-limiting example, the substrate can be any cellulosic-based paper. In another non-limiting embodiment, the ink recordable substrate can be a microporous material substrate. A non-limiting example of such a microporous substrate can be one having at least one surface and which includes:
(a) a matrix comprising a polyolefin;
(b) particulate siliceous filler distributed throughout the matrix; and
(c) a network of pores, wherein the pores can constitute at least 35 percent by volume of the microporous material substrate.

Suitable polyolefins for use in the present invention can include a wide variety known in the art. In a non-limiting embodiment, the polyolefin can comprise a polyethylene and/or a polypropylene. In a further non-limiting embodiment, the polyethylene can be a linear high molecular weight polyethylene having an intrinsic viscosity of at least 10 deciliters/gram and the polypropylene can be a linear high molecular weight polypropylene having an intrinsic viscosity of at least 5 deciliters/gram.

Intrinsic viscosity can be measured using a variety of methods known to the skilled artisan. As used herein and in the claims, intrinsic viscosity can be determined by extrapolating to zero concentration the reduced viscosities or the inherent viscosities of several dilute solutions of the polyolefin wherein the solvent is freshly distilled decahydronaphthalene to which 0.2 percent by weight, 3,5-di-tert-butyl-4-hydroxyhydrocinnamic acid, neopentanetetrayl ester [CAS Registry No. 6683-19-8] has been added. The reduced viscosities or the inherent viscosities of the polyolefin can be ascertained from relative viscosities obtained at 135°C using an Ubbelohde No. 1 viscometer.

In alternate non-limiting embodiments, on a coating-free, printing ink free, impregnant-free, and pre-bonding basis, pores constitute at least 35 percent by volume of the microporous material, or at least 60 percent by volume of the microporous material, or from 35 percent to 80 percent by volume of the microporous material, or from 60 percent to 75 percent by volume.

The particulate siliceous filler for use in the present invention can be selected from a wide variety that are known in the art. In a non-limiting embodiment, the particulate siliceous filler can be finely divided substantially water-insoluble siliceous particles. These particles can be in the form of ultimate particles, aggregates of ultimate particles, or a combination of both. In a non-limiting embodiment, at least 90 percent by weight of the siliceous particles used in preparing the microporous material can have gross particle sizes in the range of from about 5 to about 40 micrometers as determined by use of a Model TAII Coulter counter (Coulter Electronics, Inc.) but modified by stirring the filler for 10 minutes in Isoton II electrolyte (Curtin Matheson Scientific, Inc.) using a four-blade, 4.445 centimeter diameter propeller stirrer. In a further non-limiting embodiment, at least 90 percent by weight of the siliceous particles can have gross particle sizes in the range of from about 10 to about 30 micrometers. It is expected that the sizes of filler agglomerates can be reduced during processing of the ingredients to prepare the microporous material.

Non-limiting examples of suitable siliceous particles include, but are not limited to particles of silica, mica, montmorillonite, kaolinite, asbestos, talc, diatomaceous earth, vermiculite, natural and synthetic zeolites, cement, calcium silicate, aluminum silicate, sodium aluminum silicate, aluminum polysilicate, alumina silica gels, and glass particles. In a non-limiting embodiment, silica and/or the clay can be used as siliceous particles in the present invention. In a further non-limiting embodiment, precipitated silica, silica gel, or fumed silica can be used.

In alternate non-limiting embodiments, the finely divided particulate substantially water-insoluble siliceous filler can constitute from 50 to 90 percent by weight of the microporous material substrate, or from 50 to 85 percent by weight, or from 60 percent to 80 percent by weight.

In a non-limiting embodiment, the ink jet recordable substrate for use in the present invention can include non-siliceous filler particles. In a further non-limiting embodiment, finely divided substantially water-insoluble non-siliceous filler particles can be used. Non-limiting examples of suitable non-siliceous filler particles can include but are not limited to particles of titanium oxide, iron oxide, copper oxide, zinc oxide, antimony oxide, zirconia, magnesia, alumina, molybdenum disulfide, zinc sulfide, barium sulfate, strontium sulfate, calcium carbonate, magnesium carbonate, magnesium hydroxide, and finely divided substantially water-insoluble flame retardant filler particles such as particles of ethylenebis(tetra-bromophthalimide), octabromodiphenyl oxide, decabromodiphenyl oxide, and ethylenebisdibromonorbornane dicarboximide.

A further description of suitable microporous materials for use in the present invention is provided in U.S. Patent Nos. 4,861,644 to Young et al. and 5,196,262 to Schwarz et al., the relevant portions of both are incorporated herein by reference.

A variety of suitable methods can be used to apply the coating composition to the ink recordable substrate. The coating compositions generally can be applied to the substrate using any conventional technique known in the art. Non-limiting examples of suitable methods include spraying, curtain coating, dipping, rod coating, blade coating, roller application, size press, printing, brushing, drawing, slot-die coating, and extrusion. In a non-limiting embodiment, the coating then can be formed by removing the solvent from the applied coating composition. Solvent removal can be accomplished by a wide variety of conventional drying techniques known in the art. In a non-limiting embodiment, the coating can be dried by exposing the coated substrate to forced air at a temperature in the range of from ambient to 177°C (350°F).

The coating composition can be applied once or a multiplicity of times. In a non-limiting embodiment, when the coating composition is applied a multiplicity of times, the applied coating usually can be dried, either partially or totally, between coating applications. In a further non-limiting embodiment, once the coating composition has been applied to the substrate, the solvent can be substantially removed, usually by drying.

In a non-limiting embodiment, an air knife coating technique wherein the coating composition is applied to the substrate and the excess is 'blown off' by a powerful jet from the air knife, can be used. In another embodiment, a reverse roll coating can be used. In this procedure, the coating material can be measured onto an applicator roller by precision setting of the gap between an upper metering roller and the application roller below it. The coating can be 'wiped' off the application roller by the substrate as it passes around the support roller at the bottom.

In another embodiment of the present invention, gravure coating can be used to apply the coating composition. In the gravure coating method, an engraved roller can run in a coating bath, which fills the engraved dots or lines of the roller with the coating composition. Any excess coating on the roller can be wiped off by a doctor blade and the coating can be deposited onto the substrate as it passes between the engraved roller and a pressure roller. Reverse gravure coating methods can also be used. In this alternate method, the coating composition can be metered by the engraving on a roller before being wiped off as in a conventional reverse roll coating process.

In a further non-limiting embodiment, a metering rod can be used to apply the coating composition. When a metering rod is used, an excess of the coating can be deposited onto the substrate as it passes over a bath roller. The wire-wound metering rod, known as a Meyer Bar, allows the desired quantity of the coating to remain on the substrate. The quantity can be determined by the diameter of the wire used on the rod.

The thickness of the substantially dry coating can vary widely. In alternate non-limiting embodiments, the thickness of the coating can be in the range of from 1 to 40 µm, or from 5 to 25 µm, or from 5 to 15 µm.

The present invention is also directed to a coated microporous material substrate. In a non-limiting embodiment, the coated microporous substrate can include the microporous material substrate having at least one surface described above and which has a coating layer on at least one surface. The coating layer can be the dried coating composition of the present invention and can include an acrylic polymer, a polymeric nitrogen containing dye fixative compound and one or more polyurethanes as described above.

The amount of the substantially dry coating applied to the substrate, or coat weight, can be measured as coating weight per coated area. As used herein and in the claims, "substantially dry" means that the coating layer feels dry to the touch. The amount of coating can vary widely. In alternate non-limiting embodiments, the amount of coating can be at least 0.001 gram per square meter, or at least 0.01 gram per square meter, or at least 0.1 gram per square meter. In alternate non-limiting embodiments, the amount of the coating can be 50 gram per square meter or less, or 40 gram per square meter or less, or 35 gram per square meter or less. The amount of the substantially dry coating applied to the substrate can vary between any of the afore-specified amounts.

The water-resistant ink jet recordable substrate of the present invention, can be polymer processed. In alternate non-limiting embodiments, the substrate can be laminated and/or molded. Lamination can be performed using a variety of techniques known to one having ordinary skill in the art. In a non-limiting embodiment, lamination can include bonding the ink jet recording substrate to at least one layer of a substantially nonporous material. The water-resistant ink jet recordable substrate can be bonded together with the substantially nonporous material in the presence or the absence of an adhesive. As used herein, "substantially nonporous" materials means those materials which are generally impervious to the passage of liquids, gases, and bacteria.

Substantially nonporous materials for use in the present invention can vary widely and can comprise those materials customarily recognized and employed for their known barrier properties. Non-limiting examples of such materials can include substantially nonporous thermoplastic polymers, substantially nonporous metalized thermoplastic polymers, substantially nonporous thermoset polymers, substantially nonporous elastomerics, and substantially nonporous metals. The substantially nonporous material can be in the form of a sheet, film, or foil, or other shapes can be used when desired, such as for example, plates, bars, rods, tubes, and forms of more complex shape. In one non-limiting embodiment, the substantially nonporous material for use in the present invention can be in the form or a sheet, film or foil.

As used herein and the claims, the term "thermoplastic polymer" means a polymer that can be softened by heat and then regain its original properties upon cooling. The term "thermoset polymer" as used herein and the claims means a polymer that solidifies or sets on heating and cannot be remelted.

Non-limiting examples of thermoplastic polymeric materials which are suitable for use can include polyethylene, high density polyethylene, low density polyethylene, polypropylene, poly(vinyl chloride), saran, polystyrene, high impact polystyrene, nylons, polyesters such as poly(ethylene terephthalate), copolymers of ethylene and acrylic acid, copolymers of ethylene and methacrylic acid, and mixtures thereof. If desired, all or a portion of the carboxyl groups of carboxyl-containing copolymers can be neutralized with sodium, zinc, or the like. A non-limiting example of a metalized thermoplastic polymeric material can be aluminized poly(ethylene terephthalate).

Non-limiting examples of thermoset polymeric materials can include thermoset phenol-formaldehyde resin, thermoset melamine-formaldehyde resin, and mixtures thereof.

Non-limiting examples of elastomeric materials can include natural rubber, neoprene, styrene-butadiene rubber, acrylonitrile-butadiene-styrene rubber, elastomeric polyurethanes, and elastomeric copolymers of ethylene and propylene.

Non-limiting examples of metals can include but are not limited to iron, steel, copper, brass, bronze, chromium, zinc, die metal, aluminum, and cadmium.

In a non-limiting embodiment, a multilayer article comprising the present invention can be constructed using a wide variety of known methods for connecting at least one layer of an ink jet recordable substrate with at least one layer of a substantially nonporous material. In one non-limiting embodiment, at least one layer of a substantially water-resistant, at least partially coated ink jet recordable substrate can be fusion bonded to at least one layer of a substantially nonporous material. The ink jet recordable substrate generally comprises opposed major surfaces which are characteristic of sheets, films, foils, and plates. The resulting multilayer article can comprise one layer or more than one layer of the ink jet recordable substrate and one layer or more than one layer of the substantially nonporous material. In a non-limiting embodiment, at least one exterior layer can be the ink jet recordable substrate. In an alternate non-limiting embodiment, the ink jet recordable substrate can be a microporous substrate.

In one non-limiting embodiment, the multilayer article of the present invention can be produced by fusion bonding in the absence of an adhesive. Fusion bonding can be accomplished using conventional techniques such as sealing through use of heated rollers, heated bars, heated plates, heated bands, heated wires, flame bonding, radio frequency (RF) sealing, and ultrasonic sealing. Solvent bonding can be used where the substantially nonporous substrate is at least partially soluble in the applied solvent to the extent that the surface becomes tacky. The ink jet recordable substrate can be contacted with the tacky surface, and the solvent then can be removed to form the fusion bond. In a non-limiting embodiment, foamable compositions can be foamed in contact with the ink jet recordable substrate to form a fusion bond between the foam and the substrate. Films or sheets of nonporous substrate can be extruded and while still hot and tacky, contacted with the ink jet recordable substrate to form a fusion bond. The fusion bond can be permanent or peelable, depending upon the known bonding technique and/or the nature of the substantially nonporous substrate employed.

In one non-limiting embodiment, heat sealing can be used to fusion bond an ink jet recordable substrate to a substantially nonporous material. In general, heat sealing includes inserting the ink jet recordable substrate into standard heat sealing equipment which is known in the art. In one non-limiting embodiment, the ink jet recordable substrate can be inserted in conjunction with the substantially nonporous material which can be a thermoplastic and/or thermoset polymer. Heat and/or pressure can be applied to the substrate/polymer construction for a period of time. The amount of heat and/or pressure and length of time can vary widely. In general, the temperature, pressure and time can be selected such that the substrate and polymer are at least partially connected together to form a multilayer article. In a non-limiting embodiment, the temperature can be within the range of from 38°C - 204°C (100°F to 400°F). In another non-limiting embodiment, the pressure can be within the range of from 0.34 - 1.7 x 10⁵ Pas (5 psi to 250 psi). In a further non-limiting embodiment, the period of time can be in the range of from one (1) second to thirty (30) minutes. The multilayer article can then be cooled while under pressure for a typical period of time, such as thirty (30) minutes. Although the strength of the bond formed between the substrate and polymer can vary, in a non-limiting embodiment, the strength can be such that it generally exceeds the tensile properties of the substrate alone.

In one non-limiting embodiment, the substantially nonporous substrate can be polyvinyl chloride.

In another non-limiting embodiment, the ink jet recordable substrate employed in the present invention can be at least partially connected to a nonporous substrate such as polyethylene and polypropylene by heat sealing in the absence of an extrinsic adhesive. The resultant fusion bond can be sufficiently strong which is surprising inasmuch as the lamination of materials to polyolefins can be difficult unless adhesives are used.

In alternate non-limiting embodiments, the ink jet recordable substrate can be substantially continuously at least partially connected to the substantially nonporous substrate, or it can be discontinuously at least partially connected to the substantially nonporous substrate. Non-limiting examples of discontinuous bonds can include bonding areas in the form of one or more spots, patches, strips, stripes, chevrons, undulating stripes, zigzag stripes, open-curved stripes, closed-curved stripes, irregular areas, and the like. In a further non-limiting embodiment, when patterns of bonds are involved, they can be random, repetitive, or a combination of both.

In another non-limiting embodiment, an ink jet recordable substrate can be connected to a substantially nonporous material in the presence of an adhesive. The adhesive for use in the present invention can be selected from a wide variety of adhesives known in the art. Non-limiting examples of suitable adhesives include those having a sufficient molecular weight and viscosity such that the adhesive will not substantially migrate into or substantially penetrate the ink jet recordable substrate. Migration or penetration of the adhesive into the substrate can reduce the tack and bond strength of the adhesive. Non-limiting examples of suitable adhesives for use in the present invention can include but are not limited to polyvinyl acetate, starches, gums, polyvinyl alcohol, animal glues, acrylics, epoxies, polyethylene-containing adhesives, and rubber-containing adhesives. In alternate non-limiting embodiments, the adhesive can be applied to the substrate, or to the substantially nonporous material, or to both the substrate and the substantially nonporous material. In a further non-limiting embodiment, the adhesive can be introduced via the use of a tie carrier coating.

The process of bonding the substrate and substantially nonporous material in the presence of an adhesive generally includes inserting the substrate/adhesive/material construction into standard processing equipment which is known in the art. Heat and/or pressure can be applied to the substrate/adhesive/material construction for a period of time. The amount of heat and/or pressure and length of time can vary widely. In general, the temperature, pressure and time are selected such that the substrate and substantially nonporous material are at least partially connected together to form a multi-layer article. A typical temperature can be within the range of from 38°C - 204°C (100°F to 400°F). A typical pressure can be within the range of from 0.34 - 17 x 10⁵ Pas (5 psi to 250 psi), and a typical period of time can be in the range of from one (1) second to thirty (30) minutes. The multilayer article may then be cooled under pressure for a typical time period, such as thirty (30) minutes. Although the strength of the bond formed between the ink jet recordable substrate and the substantially nonporous material can vary, the bond generally can be such that it typically exceeds the tensile properties of the substrate alone.

In one non-limiting embodiment of the present invention, an ink jet recordable substrate can be molded using a variety of conventional molding techniques known in the art, which can include but are not limited to compression molding, rotational molding, injection molding, calendaring, roll/nip laminating, thermoforming vacuum forming, extrusion coating, continuous belt laminating and extrusion laminating.

In alternate non-limiting embodiments, the substrate can be molded in the presence or the absence of a substantially nonporous material, such as a thermoplastic and/or thermoset polymer. In general, the ink jet recordable substrate is inserted into standard molding equipment which is known in the art. In one non-limiting embodiment, a thermoplastic and/or thermoset polymer is introduced onto the substrate and then the substrate/polymer construction is inserted into the mold cavity. In another one non-limiting embodiment, the substrate is placed into the mold cavity and then the thermoplastic and/or thermoset polymer is introduced onto the substrate. Heat and/or pressure can be applied to the substrate/polymer construction for a period of time. The amount of heat and/or pressure and length of time can vary widely. In general, the temperature, pressure and time are selected such that the substrate and polymer are at least partially connected together to form a multi-layer article. A typical temperature can be within the range of from 38°C - 204°C (100°F to 400°F). In a non-limiting embodiment, wherein the polymer comprises a thermoplastic polymer, the substrate/polymer construction can be heated to a temperature that equals or exceeds the melt temperature of the thermoplastic polymer. In one non-limiting embodiment, where the thermoplastic polymer can be amorphous, the substrate polymer construction can be heated to a temperature that equals or exceeds the Vicat temperature. In an alternative non-limiting embodiment, wherein the polymer comprises a thermoset polymer, the temperature can be below the curing or crosslinking temperature of the polymer. A typical pressure can be within the range of from 0.34 - 1.7 x 10⁵ Pas (5 psi to 250 psi), and a typical period of time can be in the range of from one (1) second to fifteen (15) minutes. The result of a typical molding process is a re-shaping of the original article. The re-shaping is generally defined by the design of the mold cavity. Thus, in a standard molding process, a two-dimensional flat sheet can be re-shaped into a three-dimensional article.

In one non-limiting embodiment of the present invention, the ink jet recordable substrate comprises Teslin which is available from PPG Industries, Incorporated in Pittsburgh, PA. The thickness of the ink jet recordable substrate of the present invention varies widely depending on the application for use. In one non-limiting embodiment, the ink jet recordable substrate can be from 127 - 508 µm (5 to 20 mils) thick.

In one non-limiting embodiment, other tie coatings known in the art can be used in conjunction with the substrate and the substantially nonporous material.

In a non-limiting embodiment, a friction-reducing coating composition can be at least partially applied to at least one of the ink jet recordable substrate and the substantially nonporous material. In a further non-limiting embodiment, the friction-reducing coating composition can comprise at least one lubricant and at least one resin. There are a wide variety of lubricants and resins known to the skilled artisan that could be useful herein. Non-limiting examples of such suitable lubricants can include natural and synthetic waxes, natural and synthetic oils, polypropylene waxes, polyethylene waxes, silicone oils and waxes, polyesters, polysiloxanes, hydrocarbon waxes, carnauba waxes, microcrystalline waxes and fatty acids, and mixtures thereof. In a non-limiting embodiment, the lubricant for use in the present invention can include polysiloxanes, such as but not limited to silicone.

Non-limiting examples of suitable resins can include polyurethanes, polyesters, polyvinyl acetates, polyvinyl alcohols, epoxies, polyamides, polyamines, polyalkylenes, polypropylenes, polyethylenes, polyacrylics, polyacrylates, polyalkylene oxides, polyvinyl pyrrolidones, polyethers, polyketones, and co-polymers and mixtures thereof. In a non-limiting embodiment, the resin for use in the present invention can include styrene acrylic polymers such as but not limited to styrene acrylic-comprising polyurethanes, polyepoxies, polyvinyl alcohols, polyesters, polyethers, and co-polymers and mixtures thereof.

In a further non-limiting embodiment, the friction-reducing coating composition for use in the present invention can include Wikoff SCW 4890 and 2295 which are commercially available from Wikoff Industries, Incorporated, as poly board aqua coat products.

Not intending to be bound by any particular theory, it is believed that the molecules of the resin component of the friction-reducing coating can be at least partially interconnected or interlinked with the ink jet recordable substrate and/or the substantially nonporous material, such that the silicone can be essentially fixed to the surface of said substrate and/or said material. In a non-limiting embodiment, the molecules of a thermoplastic resin component can be interconnected by fusion to the ink jet recordable substrate and/or the substantially nonporous material. In another non-limiting embodiment, the molecules of a thermoset resin component can be interlinked by crosslinking to the ink jet recordable substrate and/or the substantially nonporous material.

In a further non-limiting embodiment, the friction-reducing coating composition can comprise water and/or an organic solvent. A wide variety of organic solvents known to the skilled artisan can be useful herein. Non-limiting examples of such suitable organic solvents can include but are not limited to N-methyl pyrrolidone (NMP), methyl ethyl ketone (MEK), acetone, diethyl ether, toluene, Dowanol PM, Butyl Cellosolve, and mixtures thereof. In a non-limiting embodiment, the friction-reducing coating composition can comprise water and an organic solvent, wherein said organic solvent is at least partially miscible with water.

In a non-limiting embodiment, the friction-reducing coating composition can be at least partially applied to at least one of the ink jet recordable substrate and the substantially nonporous material of the present invention. Application of said friction-reducing coating composition to said substrate and/or said material can employ a wide variety of known techniques. In alternate non-limiting embodiments, the techniques described previously herein for applying the substantially water-resistant coating to the ink jet recordable substrate can be used for application of the friction-reducing coating composition to the ink jet recordable substrate and/or the substantially nonporous material.

The amount of the substantially dry friction-reducing coating applied to the substrate/material, or "coat weight", is typically measured as coating weight per coated area. The coat weight can vary widely. In alternate non-limiting embodiments, the coat weight of the substantially dry friction-reducing coating can be at least 0.1 gram per square meter, or from greater than 0 to 50 grams per square meter, or from 1 gram per square meter to 15 grams per square meter.

In a non-limiting embodiment, the multilayer article of the present invention can include a 254 µm (10 mil) thick sheet of Teslin comprising a substantial water-resistant coating composition, a 254 µm (10 mil) sheet of polyvinylchloride, a 254 µm (10 mil) thick sheet of polyvinylchloride, and a 50.8 µm (2 mil) thick sheet of polyvinylchloride comprising a friction-reducing coating composition. In a further non-limiting embodiment, the friction-reducing coating composition can comprise a polysiloxane and a styrene acrylic polymer.

The multilayer article of the present invention has many and varied uses including gaskets, cushion assemblies, signs, cards, printing substrates, substrates for pen and ink drawings, maps (particularly maritime maps), book covers, book pages, wall coverings, and seams, joints, and seals of breathable packages.

The multilayer article of the present invention can be useful for the purpose of decorating or identifying the substantially nonporous material, or imparting to the substantially nonporous material unique properties of the substrate surface. The ink jet recordable substrate can be decorated with a variety of methods including: offset/lithographic printing, flexographic printing, painting, gravure printing, inkjet printing, electrophotographic printing, sublimation printing, thermal transfer printing, and screen printing. Decorating can also include applying a single or multilayer coating to the ink jet recordable substrate via normal coating methods known in the art. In general, the unique properties that an ink jet recordable substrate can impart on a substantially nonporous material include, but are not limited to one or more of: improved surface energy, increased porosity, decreased porosity, increased bond strength of post coat layer, and modification of the polymer's surface texture or pattern.

Polymer processing techniques are disclosed in U.S. Patent No. 4,892,779.

The present invention is more particularly described in the following examples, which are intended to be illustrative only, since numerous modifications and variations therein will be apparent to those skilled in the art. Unless otherwise specified, all parts and percentages are by weight and all references to water are meant to be deionized water.

In the following examples, the term "Teslin" refers to Teslin TS 1000, unless otherwise stated.

### EXAMPLES

### Example 1

In preparing a coating composition of the present invention, a 31 % polydimethyldiallylammonium chloride sold under the trade name CinFix RDF available from Stockhausen GmbH & Co. KG, Krefeld, Germany was diluted to 10% with deionized water in a stainless steel or polyethylene mix vessel under mild agitation. Mild agitation defined by a medium pitch three lobed mixing head, the system at a mix-head to mix vessel diameter ratio of 1 to 3 and the mix-head spinning at 600 - 1000 rpm and appropriately positioned. In a separate mix container, a 29% aqueous cationic acrylic solution sold under the name WC-71-2143 available from PPG Industries, Inc. is diluted with deionized water to 10% and added to the main mix vessel containing pre diluted CinFix RDF. In a separate mix container, a 30% aqueous cationic polyurethane dispersion sold under the trade name Witcobond W240 available from Crompton Corporation is diluted with deionized water to 10% and added to the main mix vessel containing the CinFix RDF and PPG WC-71-2143 mixture. The resultant coating composition is stirred for 15 minutes. The resultant pH was 5.5 +/- 0.5. The total solids of the composition was 10% and a viscosity of 56cps measured using a Brookfield viscometer, RVT, spindle no. 1, at 50 rpm and 25°C.

For comparison with 8181-67-09, other coating compositions were produced using alternate CinFix additives and polyurethane dispersions with or without WC-71-2143.

| Ingredients | % solids | 8181-67-01 | -02 | -03 | -04 | -05 | -06 | -07 | -08 | -09 |
|---|---|---|---|---|---|---|---|---|---|---|
| CinFix NF | 51 | 18.5 | - | - | - | - | - | - | - | - |
| CinFix 167 | 10 | - | 100 | 100 | 100 | 100 | - | - | - | - |
| CinFix RDF | 10 | - | - | - | - | - | 100 | 100 | 100 | 100 |
| WitcoBond W-234 | 31 | 49.6 | - | - | - | - | - | - | - | - |
| WitcoBond X-051 | 10 | - | 150 | 75 | - | - | 150 | 75 | - | - |
| WitcoBond W-240 | 10 | - | - | - | 150 | 75 | - | - | 150 | 75 |
| WC-71-2143 | 10 | - | - | 75 | - | 75 | - | 75 | - | 75 |

| | | | | | | | | | | |
|---|---|---|---|---|---|---|---|---|---|---|
| All values are in parts by weight (pbw). Ingredients: CinFix NF - a 50-60% active aqueous solution of poly(quaternary amine) polymer (CAS No. 68583-79-9) from Stockhausen GmbH & Co. KG, Krefeld, Germany CinFix 167 - a 50-60%, active aqueous solution of poly(quaternary amine) (Composition -Trade Secret) from Stockhausen GmbH & Co. KG, Krefeld, Germany CinFix RDF - a 30-35% active aqueous solution of poly(quaternary amine) polymer (CAS No. 26062-79-3) from Stockhausen GmbH & Co. KG, Krefeld, Germany WitcoBond W-234 - a 30-35% solids water-based dispersion of an anionic aliphatic urethane from Uniroyal Chemical of Middlebury, CT. WitcoBond X-051 - a 30-35% solids water-based dispersion of a cationic urethane from Uniroyal Chemical of Middlebury, CT WitcoBond W-240 - a 30-35% solids water-based self-cross linking anionic polyurethane dispersion from Uniroyal Chemical of Middlebury, CT WC-71-2143- a 25-30% solids aqueous dispersion of a cationic acrylic polymer from PPG Industries of Pittsburgh, PA. PPG formulation no. WC-71-2143 is as an aqueous secondary amine and hydroxyl functional acrylic polymer prepared via solution polymerization. Also described as a cationic acrylic polymer aqueous dispersion. WC-71-2143 was prepared as follows. | | | | | | | | | | |

**Table 1**

| Ingredients | Weight, grams |
|---|---|
| Initial Charge | |
| Isopropanol | 130.0 |
| | |

| Feed 1 | |
|---|---|
| Isopropanol | 113.0 |
| n-Butyl acrylate | 69.2 |
| Methyl methacrylate | 153.0 |
| 2-(tert-Butylamino)ethyl methyacrylate (CAS 3775-90-4) | 73.0 |
| Styrene | 69.2 |
| VAZO® 67 Initiator¹ | 18.2 |
| | |

| Feed 2 | |
|---|---|
| Glacial Acetic Acid | 17.7 |
| | |

| Feed 3 | |
|---|---|
| Deionized Water | 1,085.0 |

| | |
|---|---|
| ¹ 2, 2'-Azobis(2-methylbutanenitrile) initiator commercially available from E. I. du Pont de Nemours and Company, Wilmington, Delaware | |

The initial charge was heated in a reactor with agitation to reflux temperature (80°C.). The Feed 1 was added in a continuous manner over a period of 3 hours. At the completion of Feed 1 addition, the reaction mixture was held at reflux for 3 hours. The resultant acrylic polymer solution had a total solids content of 61.7 percent (determined by weight difference of a sample before and after heating at 110°C. for one hour) and number average molecular weight of 4792 as determined by gel permeation chromatography using polystyrene as the standard. Thereafter, Feed 2 was added over five minutes at room temperature with agitation. After the completion of the addition of Feed 2, Feed 3 was added over 30 minutes while the reaction mixture was heated for azeotropic distillation of isopropanol. When the distillation temperature reached 99°C, the distillation was continued about one more hour and then the reaction mixture was cooled to room temperature. The total distillation collected was 550.6 grams. The product, which was a cationic acrylic polymer aqueous solution, had a solids content of 32.6 percent by weight (determined by weight difference of a sample before and after heating at 110°C. for one hour), and a pH of 5.25.
Note: All % solids values are % by weight.
Coatings were applied to blank 21.6 x 27.9 cm (8½" x 11 ") Teslin® TS 1000 sheet. Coating weight is measured by difference using an electronic balance.
- The blank sheet is weighed.
- Coating is applied to the front side using a #9 wire-wrapped rod.
- The sheet is baked at 95° C in a textile oven (Model LTF from Wemer Mathis AG, Zurich, Switzerland) for 2 minutes.
- The sheet is removed from the oven and coating is applied to the backside using a #9 wire-wrapped rod.
- The sheet is re-baked at 95° C in the textile oven for 2 minutes.
- The sheet is removed, allowed to cool to the touch and reweighed.
- Coating weight in milligrams/square-inch is determined by dividing weight difference in milligrams by coated area.

The dynamic viscosity of the mixed coatings was measured using a #2 Zahn cup and the static viscosity was measured using a Brookfield Model DV-1 + viscometer using a #2 spindle at 100 rpm.

| Coating 8181-67 | Coating Weight (mg./square inch) mg/cm² | #2 Zahn cup (seconds) | Brookfield Viscosity (Centipoise @ 22°C) | Pa s 22 °C |
|---|---|---|---|---|
| -01 | (2.5) 0.39 | 16.5 | (51.6) | 6.16 |
| -02 | (0.4) 0.06 | 23.6 | (236.4) | 22.64 |
| -03 | (0.9) 0.06 | 17.7 | (65.6) | 6.56 |
| -04 | (1.5) 0.23 | 15.5 | (40) | 4 |
| -05 | (0.3) 0.05 | 21.1 | (85.6) | 8.56 |
| -06 | (0.4) 0.06 | 21.7 | (125.2) | 12.52 |
| -07 | (0.9) 0.14 | 16.1 | (40.8) | 4.08 |
| -08 | (0.6) 0.09 | 16.3 | (48.8) | 4.88 |
| -09 | (1.1) 0.17 | 15.4 | (41.2) | 4.12 |

Test prints from the coated Teslin sheets were generated off of an HP960C printer, set to normal default print mode. Optical density values were measured using an X-Rite^{®} densitometer, model type 418, normalized against a Macbeth^{®} black/white standard plate. Test prints were also generated using uncoated Teslin TS1000 for comparison. Optical density values are listed in the following table.

| Coating | CMY | C | M | Y | K |
|---|---|---|---|---|---|
| No coating | 0.76 | 1.02 | 0.81 | 0.55 | 0.76 |
| 8181-67-01 | 1.30 | 1.05 | 1.32 | 1.04 | 1.13 |
| -02 | 1.01 | 0.84 | 1.05 | 0.84 | 1.03 |
| -03 | 1.08 | 0.83 | 1.03 | 0.83 | 1.08 |
| -04 | 1.05 | 0.95 | 1.23 | 0.96 | 1.04 |
| -05 | 1.15 | 0.87 | 1.07 | 0.87 | 1.15 |
| -06 | 1.25 | 1.11 | 1.26 | 0.97 | 1.28 |
| -07 | 1.23 | 1.27 | 1.21 | 1.01 | 1.39 |
| -08 | 1.27 | 1.07 | 1.28 | 1.00 | 1.16 |
| -09 | 1.30 | 1.24 | 1.41 | 1.13 | 1.29 |

Coating 8181-67-09 is clearly the best overall in optical density performance of all the examples as is illustrated in the following graphic representation of the previous Table. The use of WC-71-2143 in the formula provides improved optical density over polyurethane dispersion-only formulas.

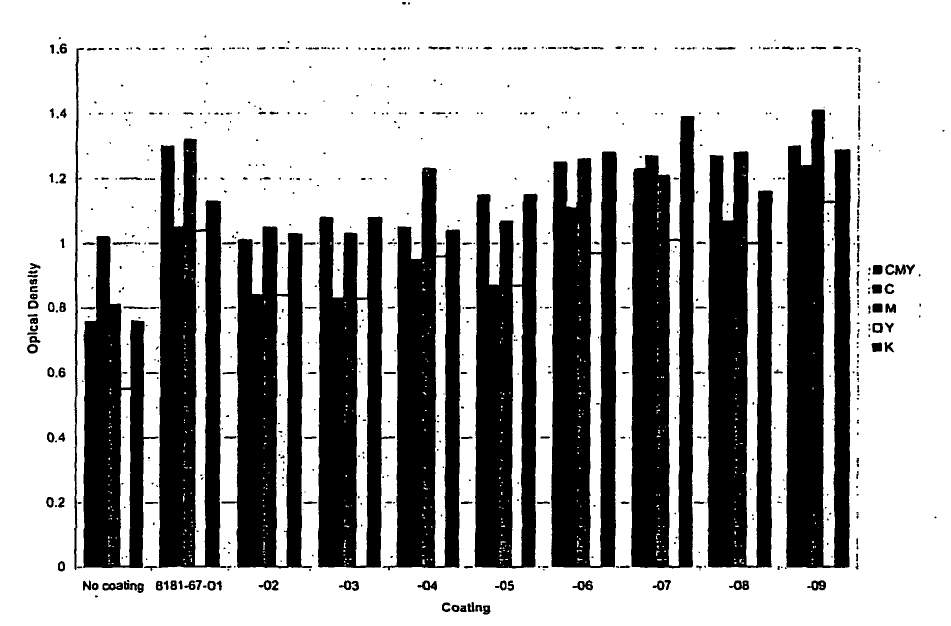

Coating 8181-67-09 was applied to 8½" x 11" sheets of Teslin® TS1000 and SP1000 and cured as described above. Test prints from the coated Teslin sheets were generated off of an HP960C printer, set to normal default print mode. Optical density values were measured using an X-Rite^{®} densitometer, model type 418, normalized against a Macbeth® black/white standard plate. Optical density values are listed in the following table.

| Teslin | CMY | C | M | Y | K |
|---|---|---|---|---|---|
| TS1000 | 1.08 | 1.20 | 1.23 | 0.99 | 1.16 |
| SP1000 | 1.09 | 1.22 | 1.22 | 1.02 | 1.16 |

### Example 2

Coating composition prepared as in example 1 and was applied to a 500ft roll of 10.5mil Teslin TS1000 microporous substrate by a flexographic or gravure coating method. In this coating method, a line consisting of two coating stations, each with a forced air drying oven was used. Each coating station consists of a coating feed chamber, anilox roll and rubber application roll. The coating feed chambers were supplied from a coating holding tank and pump. Continuous roll stock was threaded through the equipment so that both side were coated during a single pass. The apparatus was fitted with a 7BCM (billion cubic microns) roll and a 5BCM anilox roll. Successive passes were arranged so that both sheet surfaces contacted the rubber roll wet by each anilox roll type at least once. The complete coating sequence is described as follows: Pass #1 (7bcm-face/5bcm-back) + Pass #2 (7bcm-face/5bcm-back) + Pass # 3 (5bcm-face/7bcm-back). The line speed was 73 m/min (240fpm), oven temperature was 105°C (220°F) and 3 passes per roll were made, which translates into 3 passes per surface. The coating composition was applied with an approximate coat weight of 0.73g/m² (total front and back). The resultant roll was converted into 21.6 x 27.9 cm (8.5" x 11") sheets, grain long. Test prints were generated off of an HP960C printer, set to normal default print mode. Both sides of the substrate were printed. Optical density values were measured using an X-Rite^{®} densitometer, model type 418, normalized against a Macbeth^{®} black/white standard plate. Optical densities values are listed in the following table.

**Optical Density Values**

| Sheet Surface | CMY | C | M | Y | K |
|---|---|---|---|---|---|
| Side A | 1.39 | 1.06 | 1.10 | 0.77 | 1.44 |
| Side B | 1.36 | 1.04 | 1.10 | 0.75 | 1.50 |

In addition to optical density the prints had good overall aesthetics, distinctness of image and quality.

### Example 3

Two 2012 m (6,600ft) rolls of 287 µm (10.5 mil) Teslin TS1000 were sized with coating composition described in example 1 in the same manner as described in example 2. The resultant rolls was converted into 21.6 x 27.9 cm (8.5" x 11") sheets, grain long. Test prints were generated off of an HP960C printer set to normal default print mode and best ink jet photo grade matte finish. Both sides of the substrate were printed. Optical density values were measured using an X-Rite^{®} densitometer, model type 418, normalized against a Macbeth^{®} black/white standard plate. Optical densities values are listed in the following table.

**Optical Density Values**

| Sheet Surface | Print Setting | CMY | C | M | Y | K |
|---|---|---|---|---|---|---|
| Side A | Normal Default | 1.47 | 1.07 | 1.26 | 0.86 | 1.65 |
| Side B | Normal Default | 1.54 | 1.09 | 1.30 | 0.88 | 1.65 |
| Side A | Best, Ink Jet Photo Grade Matte Finish | 1.32 | 1.12 | 1.27 | 0.86 | 1.20 |
| Side B | Best, Ink Jet Photo Grade Matte Finish | 1.29 | 1.11 | 1.25 | 0.89 | 1.16 |

In addition to the optical density values, the prints generated using best mode had better image quality compared to normal mode prints. These same images printed using best mode had very good pigmented ink adhesion as measured using a coin rub test. The printed surface was rubbed with a coin until the substrate began to fatigue and fail. The printed surface maintained an acceptable distinctness of image with very little ink rub off.

### Example 4

A treated sheet (sample A) from the substrate prepared in the previous example was printed with a test print pattern; using printer type HP960c set on best mode, ink jet photo grade matte finish. The optical density of color bars representing the five primary color/ink types: composite black, cyan, magenta, yellow and pigment black were measured. The printed color bars were submerged in de-ionized water for 24 hours and the resultant optical densities measured. The procedure was then repeated after a total of 96 hours of continuous soaking. The test was repeated on two additional samples (B & C) from the same lot of substrate and both printed in the same manner. The optical density values are given in the following tables.

**Optical Density Retention (Sample A)**

| Water Soak Time | CMY | Cyan | Magenta | Yellow | Pigment Black |
|---|---|---|---|---|---|
| Initial | 1.37 | 1.32 | 1.22 | 0.90 | 1.36 |
| 24 hours | 1.31 | 1.31 | 1.23 | 0.90 | 1.35 |
| 96 hours | 1.35 | 1.31 | 1.26 | 0.89 | 1.34 |

**Optical Density Retention (Sample B)**

| Water Soak Time | CMY | Cyan | Magenta | Yellow | Pigment Black |
|---|---|---|---|---|---|
| Initial | 1.33 | 1.25 | 1.27 | 0.92 | 1.32 |
| 24 hours | 1.25 | 1.31 | 1.35 | 0.98 | 1.22 |
| 96 hours | 1.25 | 1.30 | 1.37 | 0.99 | 1.20 |

**Optical Density Retention (Sample C)**

| Water Soak Time | CMY | Cyan | Magenta | Yellow | Pigment Black |
|---|---|---|---|---|---|
| Initial | 1.39 | 1.33 | 1.22 | 0.91 | 1.37 |
| 24 hours | 1.39 | 1.35 | 1.29 | 0.92 | 1.37 |
| 96 hours | 1.39 | 1.32 | 1.31 | 0.92 | 1.36 |

All color bars remained solid after 96hours of soaking time. Also only some slight bleed was visible off of the composite and pigment black color bars. Bold 10point font that was part of the test print samples remained legible.

### Example 5

Several 2012 cm (6,600ft rolls) of 287 µm (10.5mil) Teslin TS1000 were sized with coating composition described in example 1 in accordance the technique described in example 2. The resultant rolls was converted into 21.6 x 27.9 cm (8.5" x 11") sheets, grain long. Test prints were generated off of an HP960C printer, set to best ink jet photo grade matte finish. Both sides of the substrate were printed. The optical density of color bars representing the five primary color/ink types: composite black, cyan, magenta, yellow and pigment black were measured. The printed color bars were submerged in tap water for 15minutes and the resultant optical densities measured. The procedure was then repeated after a total of 24hours of continuous soaking. The optical density values are given in the following tables.

**Optical Density Retention - Side A 24hrs, Tap Water**

| | | | | | |
|---|---|---|---|---|---|
| Water Soak Time | CMY | Cyan | Magenta | Yellow | Pigment Black |
| Initial | 1.31 | 1.13 | 1.26 | 0.88 | 1.30 |
| 15 minutes | 1.31 | 1.14 | 1.25 | 0.90 | 1.30 |
| 24 hours | 1.32 | 1.12 | 1.24 | 0.89 | 1.29 |

**Optical Density Retention - Side B 24hrs, Tap Water**

| | | | | | |
|---|---|---|---|---|---|
| Water Soak Time | CMY | Cyan | Magenta | Yellow | Pigment Black |
| Initial | 1.31 | 1.14 | 1.27 | 0.89 | 1.30 |
| 15 minutes | 1.33 | 1.14 | 1.23 | 0.91 | 1.30 |
| 24 hours | 1.29 | 1.10 | 1.23 | 0.90 | 1.29 |

All color bars remained solid after 24hours of soaking time in tap water. No bleed was visible off of any of the colors. Bold 10point font that was part of the test print samples, printed in composite black maintained good optical clarity.

### Example 6

Samples collected after two coating passes during the campaign described in the previous example were converted into 21.6 x 27.9 cm (8.5" x 11") sheets, grain long and tested. Test prints were generated off of an HP960C printer, set to best ink jet photo grade matte finish. Both sides of the substrate were printed. The optical density of color bars representing the five primary color/ink types: composite black, cyan, magenta, yellow and pigment black were measured. The printed color bars were submerged in tap water for 15minutes and the resultant optical densities measured. The procedure was then repeated after a total of 24hrs of continuous soaking. The optical density values are given in the following tables.

**Optical Density Retention - Side A, 2 - pass 24hrs, Tap Water**

| Water Soak Time | CMY | Cyan | Magenta | Yellow | Pigment Black |
|---|---|---|---|---|---|
| Initial | 1.31 | 1.16 | 1.27 | 0.87 | 1.30 |
| 15 minutes | 1.36 | 1.22 | 1.33 | 0.95 | 1.21 |
| 24 hours | 1.26 | 1.09 | 1.16 | 0.84 | 1.25 |

**Optical Density Retention - Side B, 2 - pass 24hrs, Tap Water**

| Water Soak Time | CMY | Cyan | Magenta | Yellow | Pigment Black |
|---|---|---|---|---|---|
| Initial | 1.28 | 1.14 | 1.17 | 0.83 | 1.27 |
| 15 minutes | 1.32 | 1.20 | 1.20 | 0.89 | 1.30 |
| 24 hours | 1.25 | 1.06 | 1.13 | 0.77 | 1.22 |

In addition to the optical density retention results, a slight amount of bleed was visible off of both the composite and pigment black inks after 24 hours of water soak time. The 24 hour soaked samples had a very minor grainy pattern and the all printed text maintain good optical clarity.

### Example 7

Substrate samples were produced in accordance with operational settings outlined in example 2, with the exception of coating sequence and with the coating adjusted from 10% to 7% active solids. Samples were collected after 2, 3 and 4 passes. The coating sequence followed for the 2 pass samples is: Pass #1 (7bcm-face/5bcm-back) + Pass #2 (5bcm-face/7bcm-back). The coating sequence followed for the 3 pass samples is: Pass #1 (7bcm-face/5bcm-back) + Pass #2 (7bcm-face/5bcm-back) + Pass #3 (5bcm-face/7bcm-back). The coating sequence followed for the 4 pass samples is: Pass #1 (7bcm-face/5bcm-back) + Pass #2 (7bcm-face/5bcm-back) + Pass #3 (5bcm-face/7bcm-back) + Pass #4 (5bcm-face/7bcm-back). The samples collected after two, three and four coating passes were converted into 21.6 x 27.9 cm (8.5" x 11") sheets, grain long and tested. Test prints were generated off of an HP960C printer, set to best ink jet photo grade matte finish. Both sides of the substrate were printed. The optical density of color bars representing the five primary color/ink types: composite black, cyan, magenta, yellow and pigment black were measured. The printed color bars were submerged in tap water for 15minutes and the resultant optical densities measured. The procedure was then repeated after a total of 24hrs of continuous soaking. The optical density values are given in the following tables.

**Optical Density Retention - Side A, 7% solids, 2 - pass 24hrs, Tap Water**

| Water Soak Time | CMY | Cyan | Magenta | Yellow | Pigment Black |
|---|---|---|---|---|---|
| Initial | 1.26 | 1.12 | 1.13 | 0.80 | 1.21 |
| 15 minutes | 1.18 | 1.11 | 1.05 | 0.82 | 1.20 |
| 24 hours | 1.19 | 1.03 | 1.00 | 0.73 | 1.18 |

**Optical Density Retention - Side B, 7% solids, 2 - pass 24hrs, Tap Water**

| Water Soak Time | CMY | Cyan | Magenta | Yellow | Pigment Black |
|---|---|---|---|---|---|
| Initial | 1.23 | 1.13 | 1.08 | 0.77 | 1.22 |
| 15 minutes | 1.17 | 1.10 | 0.97 | 0.71 | 1.15 |
| 24 hours | 1.15 | 0.98 | 0.92 | 0.65 | 1.14 |

**Optical Density Retention - Side A, 7% solids, 3 - pass 24hrs, Tap Water**

| Water Soak Time | CMY | Cyan | Magenta | Yellow | Pigment Black |
|---|---|---|---|---|---|
| Initial | 1.29 | 1.14 | 1.18 | 0.85 | 1.28 |
| 15 minutes | 1.26 | 1.12 | 1.11 | 0.84 | 1.25 |
| 24 hours | 1.23 | 1.05 | 1.11 | 0.79 | 1.24 |

**Optical Density Retention - Side B, 7% solids, 3 - pass 24hrs, Tap Water**

| | | | | | |
|---|---|---|---|---|---|
| Water Soak Time | CMY | Cyan | Magenta | Yellow | Pigment Black |
| Initial | 1.31 | 1.16 | 1.19 | 0.85 | 1.29 |
| 15 minutes | 1.30 | 1.20 | 1.14 | 0.87 | 1.28 |
| 24 hours | 1.26 | 1.07 | 1.16 | 0.80 | 1.27 |

**Optical Density Retention - Side A, 7% solids, 4 - pass**

| | | | | | |
|---|---|---|---|---|---|
| 24hrs, Tap Water | | | | | |
| Water Soak Time | CMY | Cyan | Magenta | Yellow | Pigment Black |
| Initial | 1.33 | 1.16 | 1.25 | 0.87 | 1.33 |
| 15 minutes | 1.34 | 1.18 | 1.23 | 0.92 | 1.33 |
| 24 hours | 1.32 | 1.11 | 1.13 | 0.91 | 1.31 |

**Optical Density Retention - Side B, 7% solids, 4 - pass**

| 24hrs, Tap Water | | | | | |
|---|---|---|---|---|---|
| Water Soak Time | CMY | Cyan | Magenta | Yellow | Pigment Black |
| Initial | 1.31 | 1.15 | 1.21 | 0.85 | 1.30 |
| 15 minutes | 1.30 | 1.15 | 1.16 | 0.90 | 1.31 |
| 24 hours | 1.27 | 1.09 | 1.15 | 0.87 | 1.29 |

In addition to optical density retention, differences were observed in the print quality following the 24hour tap water soak. The 2 and 3 pass samples became grainy following 24-hour water soak. The grainy appearance was more obvious for the 2-pass sample than for the 3 pass sample. Some bleed was visible off of the composite and pigmented black color bars. Bleed resistance improved as the number of coating passes increased. Bold 10point font that was part of the test print samples, printed in composite black maintained good optical clarity for all three sample types.

### Example 8

Two 2012 m (6,600ft rolls) 287 µm (10.5mil) Teslin TS1000 were sized with coating composition described in example 1, formulated at 12.5% active solids in accordance with operational settings described in example 2. The resultant rolls were converted into 21.6 x 27.9 (8.5" x 11") sheets, grain long. Test prints were generated off of an HP960C printer, set to best ink jet photo grade matte finish. Both sides of the substrate were printed. Optical density values were measured using an X-Rite^{®} densitometer, model type 418, normalized against a Macbeth^{®} black/white standard plate. Optical densities values are listed in the following table.

**Optical Density Values**

| Sheet Surface | Print Setting | CMY | C | M | Y | K |
|---|---|---|---|---|---|---|
| Side A | Best, Ink Jet Photo Grade Matte Finish | 1.38 | 1.19 | 1.34 | 0.93 | 1.26 |
| Side B | Best, Ink Jet Photo Grade Matte Finish | 1.36 | 1.18 | 1.33 | 0.91 | 1.24 |

In addition to optical density the prints had excellent overall aesthetics, distinctness of image and quality.

### Example 9

A coating composition prepared as in example 1, with the exception that the resultant solids content was 12.5% instead of 10%. The coating composition was applied to a 2012 m (6,600ft) roll of 287 µm (10.5mil) Teslin SP1000 microporous substrate by a flexographic or gravure coating method as described in example 2. The resultant roll was converted into 21.6 x 27.9 cm (8.5" x 11" sheets), grain long. Test prints were generated off of an HP960C printer, set to best ink jet photo grade matte finish. Both sides of the substrate were printed. Optical density values were measured using an X-Rite^{®} densitometer, model type 418, normalized against a Macbeth^{®} black/white standard plate. Optical densities values are listed in the following table.

**Optical Density Values**

| Sheet Surface | CMY | C | M | Y | K |
|---|---|---|---|---|---|
| Side A | 1.41 | 1.32 | 1.25 | 0.89 | 1.37 |
| Side B | 1.38 | 1.33 | 1.22 | 0.88 | 1.40 |

In addition to optical density the prints had good overall aesthetics, distinctness of image and quality.

### Composite Sheet and Card Fabrication

### Example 10 - Hydraulic Platen Lamination (One Composite Sheet)

Sheet 66 x 97 cm (26-inch x 38-inch) of treated Teslin TS1000 substrate, 287 µm (10.5mils) thick, were cut from a master roll in the grain long direction. The Teslin had been coated with 3 passes on each side (3x3) using the same coating composition as described in example 1 and the same Flexographic coating technology described in example 2. One coated Teslin sheet was placed on top of one 66 x 97 cm (26-inch x 38-inch) sheet of 0.53 cm (0.21-inch) polyvinylchloride (PVC), supplied by Empire Plastics. The PVC sheet was cut in the grain long direction. A sheet 69 x 99 cm (27-inch x 39-inch) of 50.8 µm (2-mil) clear polyester was placed over the Teslin sheet to act as a release liner. (Note! This release liner is removed from the composite sheet following lamination and is not an integral part of the final composite sheets.) This construction was placed between two 69 x 99 cm (27" x 39") x 762 µm (30mil) polished stainless steel metal plate. The resultant stack was then placed between two 69 x 99 cm (27" x 39") x 3.175 mm (125mil) un-polished non-corrosive metal plates. This entire construction was placed in a 200-Ton Wabash laminating press, preheated to 104°C (220F). The composite construction was compression laminated at a pressure of 13.8 x 10⁵ Pas (200psi) for 8minutes at a temperature of 104°C (220F). While under press, the platens were cooled to less than 38°C (100°F), which took approximately 22minutes. After being removed from the press, the resultant composite sheet was removed from the stack construction. The finished composite sheet had good integrity; any attempt to delaminate destroyed the Teslin layer, which demonstrated a good adhesive and seamless bond between the Teslin and the PVC. ISO7910 ID-1 cards were die cut from the resultant 66 x 97 cm (26-inch x 38-inch) x 795 µm (30.5mil) composite sheet. The finished cards had good integrity and good lat flat. Any attempt to delaminate destroyed the Teslin layer, which demonstrated a good adhesive and seamless bond between the Teslin and the PVC.

### Example 11 - Hydraulic Platen Lamination (Four Composite Sheets/Book)

Sheets 66 x 97 cm (26-inch x 38-inch) of treated Teslin substrate, 287 µm (10.5mils) thick, were cut from a master roll in the grain long direction. The Teslin had been coated with 3 passes on each side (3x3) using the same coating composition as described in example 1 and the same Flexographic coating technology described in example 2. One coated Teslin sheet was placed on top of one 66 x 97cm (26-inch x 38-inch) sheet of 0.53 cm (0.21-inch) polyvinylchloride (PVC), supplied by Empire Plastics. The PVC sheet was cut in the grain long direction. A sheet 69 x 99 cm (27-inch x 39-inch) of 50.8 µm (2-mil) clear polyester was placed over the Teslin sheet to act as a release liner. This construction was placed between two 69 x 99 cm (27" x 39") x 762 µm (30mil) polished stainless steel metal plate. An identical polyester/treated Teslin sheet/PVC lay-up was placed on top of a stainless plate from the existing construction. A polished metal plate was placed over the exposed polyester release liner. The pattern was repeated twice more so that four pre-pressed multi-layer ply's existed in the stack. The resultant stack was then placed between two 69 x 99 cm (27" x 39") x 1.175 mm (125 mil) un-polished non-corrosive metal plates. This entire construction, referred to as a book, was placed in a 200-Ton Wabash laminating press, preheated to 104°C (220F). The composite construction was compression laminated at a pressure of 13.8 x 10⁵ Pas (200psi) for 8minutes at a temperature of 109°C (220F). While under press, the platens were cooled to less than 38°C (100°F) which took approximately 22minutes. After being removed from the press, all four composite sheets were removed from the book. All four finished composite sheets had good integrity; any attempt to delaminate destroyed the Teslin layer, which demonstrated a good adhesive and seamless bond between the Teslin and the PVC ISO7910 ID-1 cards were die cut from the each of the 66 x 97 cm (26-inch x 38-inch ) x 775 µm (30.5mil) composite sheets. The finished cards from each composite sheet had good integrity and good lat flat. Any attempt to delaminate destroyed the Teslin layer, which demonstrated a good adhesive and seamless bond between the Teslin and the PVC.

### Example 12 - Hydraulic Platen Lamination (10 Composite Sheets/Book)

Sheets 66 x 97cm (26-inch x 38-inch) of treated Teslin substrate, 287 µm (10.5mils) thick, were cut from a master roll in the grain long direction. The Teslin had been coated with 3 passes on each side (3x3) using the same coating composition as described in example 1 and the same Flexographic coating technology described in example 2. One coated Teslin sheet was placed on top of one 66 x 97 cm (26-inch x 38-inch sheet) of 0.53 cm (0.21-inch) polyvinylchloride (PVC), supplied by Empire Plastics. The PVC sheet was cut in the grain long direction. A sheet 69 x 99 cm (27-inch x 39-inch) of 50.8 cm (2-mil) clear polyester was placed over the Teslin sheet to act as a release liner. This construction was placed between two 69 x 99 cm (27" x 39") x 762 µm (30mil) polished stainless steel metal plate. An identical polyester/treated Teslin sheet/PVC lay-up was placed on top of a stainless plate from the existing construction. A polished metal plate was placed over the exposed polyester release liner. The pattern was repeated eight more times so that ten pre-pressed multi-layer ply's existed in the stack. The resultant stack was then placed between two 69 x 99 cm (27" x 39") x 3.175 mm (125mil) un-polished non-corrosive metal plates. This entire construction, referred to as a book, was placed in a 200-Ton Wabash laminating press, preheated to 104°C (220F). The composite construction was compression laminated at a pressure of 13.8 x 10⁵ Psi (200psi) for 8minutes at a temperature of 104°C (220F) While under press, the platens were cooled to less than 38°C (100°F) which took approximately 22minutes. After being removed from the press, all ten composite sheets were removed from the book. All ten finished composite sheets had good integrity; any attempt to delaminate destroyed the Teslin layer, which demonstrated a good adhesive and seamless bond between the Teslin and the PVC ISO7910 ID-1 cards were die cut from the each of the 66 x 97 cm (26-inch x 38-inch) x 775 µm (30.5mil) composite sheets. The finished cards from each composite sheet had good integrity and good lat flat. Any attempt to delaminate destroyed the Teslin layer, which demonstrated a good adhesive and seamless bond between the Teslin and the PVC.

### Example 13 - (10 Composite Sheets/Book Other Process Conditions)

Sheets 66 x 97cm (26-inch x 38-inch) of treated Teslin substrate, 287 µm (10.5mils) thick, were cut from a master roll in the grain long direction. The Teslin had been coated with 3 passes on each side (3x3) using the same coating composition as described in example 1 and the same Flexographic coating technology described in example 2 One coated Teslin sheet was placed on top of one 66 x 97 cm (26-inch x 38-inch) sheet of 0.53 cm (21-inch) polyvinylchloride (PVC), supplied by Empire Plastics. The PVC sheet was cut in the grain long direction. A sheet 69 x 99 cm (27-inch x 39-inch) of 50.8 µm (2-mil) clear polyester was placed over the Teslin sheet to act as a release liner. This construction was placed between two 69 x 99 cm (27" x 39") x 762 µm (30mil) polished stainless steel metal plate. An identical polyester/treated Teslin sheet/PVC lay-up was placed on top of a stainless plate from the existing construction. A polished metal plate was placed over the exposed polyester release liner. The pattern was repeated eight more times so that ten pre-pressed multi-layer ply's existed in the stack. The resultant stack was then placed between two 69 x 97 cm (27" x 39") x 3.175 mm (125mil) un-polished non-corrosive metal plates. This entire construction, referred to as a book, was placed in a 200-Ton Wabash laminating press, preheated to 93°C (200°F). The composite construction was compression laminated at a pressure of 12.4 x 10⁵ Pas (180psi) for 6minutes at a temperature of 93°C (200°F). While under press, the platens were cooled to less than 28°C (100°F), which took approximately 18minutes. After being removed from the press, all ten composite sheets were removed from the book. All ten finished composite sheets had good integrity; any attempt to delaminate destroyed the Teslin layer, which demonstrated a good adhesive and seamless bond between the Teslin and the PVC ISO7910 ID-1 cards were die cut from the each of the 66 x 97 cm (26-inch x 38-inch) x 775 cm (30.5mil) composite sheet. The finished cards from each composite sheet had good integrity and good lat flat. Any attempt to delaminate destroyed the Teslin layer, which demonstrated a good adhesive and seamless bond between the Teslin and the PVC.

### Example 14 - (10 Composite Sheets/Book, Other Process Conditions)

Sheets 66 x 97 cm (26-inch x 38-inch) of treated Teslin substrate, 287 µm (10.5mils) thick, were cut from a master roll in the grain long direction. The Teslin had been coated with 3 passes on each side (3x3) using the same coating composition as described in example 1 and the same Flexographic coating technology described in example 2. One coated Teslin sheet was placed on top of one 66 x 97 cm (26-inch x 38-inch sheet) of 0.53 cm (0.21-inch) polyvinylchloride (PVC), supplied by Empire Plastics. The PVC sheet was cut in the grain long direction. A sheet 69 x 99 cm (27-inch x 39-inch) of 50.8 µm (2-mil) clear polyester was placed over the Testin sheet to act as a release liner. This construction was placed between two 69 x 99 cm (27" x 39") x 762 µm (30mil) polished stainless steel metal plate. An identical polyester/treated Teslin sheet/PVC lay-up was placed on top of a stainless plate from the existing construction. A polished metal plate was placed over the exposed polyester release liner. The pattern was repeated eight more times so that ten pre-pressed multi-layer ply's existed in th stack. The resultant stack was then placed between two 69 x 99 cm (27" x 39") x 3.175 mm (125mil) un-polished non-corrosive metal plates. This entire construction, referred to as a book, was placed in a 200-Ton Wabash laminating press, preheated to 149°C (300°F). The composite construction was compression laminated at a pressure of 17.23 x 10⁵ Pas (250psi) for 10 minutes at a temperature of 149°C (300°F) While under press, the platens were cooled to less than 38°C (100°F), which took approximately 25minutes. After being removed from the press, all ten composite sheets were removed from the book. All ten finished composite sheets had good integrity; any attempt to delaminate destroyed the Teslin layer, which demonstrated a good adhesive and seamless bond between the Teslin and the PVC 1507910 ID-1 cards were die cut from the each of the 66 x 97 cm (26-inch x 38-inch) x 775 µm (30.5ml) composite sheets. The finished cards from each composite sheet had good integrity and good lat flat. Any attempt to delaminate destroyed the Teslin layer, which demonstrated a good adhesive and seamless bond between the Teslin and the PVC.

### Example 15 - (7 Composite Sheets/Book, Other Process Conditions)

Sheets 66 x 97cm (26-inch x 38-inch) of treated Teslin substrate 287 µm (10.5 mils) thick, were cut from a master roll in the grain long direction. The Teslin had been coated with 3 passes on each side (3x3) using the same coating composition as described in example 1 and the same Flexographic coating technology described in example 2. One coated Teslin sheet was placed on top of one 66 x 97cm (26-inch x 38-inch) sheet of 0.53 cm (0.21-inch) polyvinylchloride (PVC), supplied by Empire Plastics. The PVC sheet was cut in the grain long direction. A shee 69 x 99 cm (27 inch x 39-inch) of 50.8 µm (2-mil) clear polyester was placed over the Teslin sheet to act as a release liner. This construction was placed between two 69 x 99 cm (27" x 39") x 762 µm (30mil) polished stainless steel metal plate. An identical polyester/treated Teslin sheet/PVC lay-up was placed on top of a stainless plate from the existing construction. A polished metal plate was placed over the exposed polyester release liner. The pattern was repeated six more times so that seven pre-pressed multi-layer ply's existed in the stack. The resultant stack was then placed between two 69 x 99 cm (27" x 39") x 3.175 mm (125mil) un-polished non-corrosive metal plates. This entire construction, referred to as a book, was placed in a 200-Ton Wabash laminating press, preheated to 104°C (220°F). The composite construction was compression laminated at a pressure of 15.16 x 10⁵ Pas (220psi) for 7minutes at a temperature of 104°C (220°F). While under press, the platens were cooled to less than 38°C (100°F), which took approximately 22minutes. After being removed from the press, all seven composite sheets were removed from the book. All seven finished composite sheets had good integrity; any attempt to delaminate destroyed the Teslin layer, which demonstrated a good adhesive and seamless bond between the Teslin and the PVC. ISO7910 ID-1 cards were die cut from the each of the 66 x 97 cm (26-inch x 38-inch) x 775 µm (30.5 mil) composite sheets. The finished cards from each composite sheet had good integrity and good lat flat. Any attempt to delaminate destroyed the Teslin layer, which demonstrated a good adhesive and seamless bond between the Teslin and the PVC.

### Example 15 - (7 Composite Sheets/Book, Other Process Conditions)

Sheets 66 x 97 cm (26-inch x 38-inch) of treated Teslin substrate, 287 cm (10.5mils) thick, were cut from a master roll in the grain long direction. The Teslin had been coated with 3 passes on each side (3x3) using the same coating composition as described in example 1 and the same Flexographic coating technology described in example 2. One coated Teslin sheet was placed on top of one 66 x 97 cm (26-inch x 38-inch) sheet of 0.53 cm (0.21-inch) polyvinylchloride (PVC), supplied by Empire Plastics. The PVC sheet was cut in the grain long direction. A sheet 69 x 99 cm (27-inch x 39-inch) of 50.8 µm (2-mil) clear polyester was placed over the Teslin sheet to act as a release liner. This construction was placed between two 69 x 99 cm (27" x 39") x 762 µm (30 mil) polished stainless steel metal plate. An identical polyester/treated Teslin sheet/PVC lay-up was placed on top of a stainless plate from the existing construction. A polished metal plate was placed over the exposed polyester release liner. The pattern was repeated six more times so that seven pre-pressed multi-layer ply's existed in stack. The resultant stack was then placed between two 69 x 99 cm (27" x 39") x 3.175 mm (125mil) un-polished non-corrosive metal plates. This entire construction, referred to as a book, was placed in a 200-Ton Wabash laminating press, preheated to 104°C (220°F). The composite construction was compression laminated at a pressure of 15.16 x 10⁵ Pas (220psi) for 7minutes at a temperature of 104°C (220°F) While under press, the platens were cooled to less than 38°C (100F), which took approximately 22 minutes. After being removed from the press, all seven composite sheets were removed from the book. All seven finished composite sheets had good integrity; any attempt to delaminate destroyed the Teslin layer, which demonstrated a good adhesive and seamless bond between the Teslin and the PVC-ISO7910 ID-1 cards were die cut from the each of the 66 x 97 cm (26-inch x 38-inch) x 775 µm (30.5mil) composite sheets. The finished cards from each composite sheet had good integrity and good lat flat. Any attempt to delaminate destroyed the Teslin layer, which demonstrated a good adhesive and seamless bond between the Teslin and the PVC.

### Example 16 - (7 Composite Sheets/Book, Other Process Conditions)

Sheets 66 x 97 cm (26-inch x 38-inch) of treated Teslin substrate, 287 µm (10.5 mils) thick, were cut from a master roll in the grain long direction. The Teslin had been coated with 3 passes on each side (3x3) using the same coating composition as described in example 1 and the same Flexographic coating technology described in example 2. One coated Teslin sheet was placed on top of one 66 x 97 cm (26-inch x 38-inch sheet) of 0.53 cm (0.21-inch) polyvinylchloride (PVC), supplied by Empire Plastics. The PVC sheet was cut in the grain long direction. A sheets 69 x 99 cm (27- inch x 39-inch) of 50.8 µm (2-mil) clear polyester was placed over the Teslin sheet to act as a release liner. This construction was placed between two 69 x 99 cm (27" x 39") x 762 µm (30mil) polished stainless steel metal plate. An identical polyester/treated Teslin sheet/PVC lay-up was placed on top of a stainless plate from the existing construction. A polished metal plate was placed over the exposed polyester release liner. The pattern was repeated six more times so that seven pre-pressed multi-layer ply's existed in the stack. The resultant stack was then placed between two 69 x 99 cm (27" x 39") x 3.175 mm (125mil) un-polished non-corrosive metal plates. This entire construction, referred to as a book, was placed in a 200-Ton Wabash laminating press, preheated to 93°C (200°F). The composite construction was compression laminated at a pressure of 17.23 x 10⁵ Pas (250psi) for 7minutes at a temperature of 93°C (200°F). While under press, the platens were cooled to less tha 38°C (100°F) which took approximately 22minutes. After being removed from the press, all seven composite sheets were removed from the book. All seven finished composite sheets had good integrity; any attempt to delaminate destroyed the Teslin layer, which demonstrated a good adhesive and seamless bond between the Teslin and the PVC ISO7910 ID-1 cards were die cut from the each of the 66 x 97cm (26-inch x 38-inch) x 775 µm (30.5mil) composite sheets. The finished cards from each composite sheet had good integrity and good lat flat. Any attempt to delaminate destroyed the Teslin layer, which demonstrated a good adhesive and seamless bond between the Teslin and the PVC.

### Example 16A - (7 Composite Sheets/Book, Other Process Conditions)

Sheets 66 x 97 cm (26-inch x 38-inch) of treated Teslin substrate, 267 µm (10.5mils) thick, were cut from a master roll in the grain long direction. The Teslin had been coated with 3 passes on each side (3x3) using the same coating composition as described in example 1 and the same Flexographic coating technology described in example 2. One coated Teslin sheet was placed on top of one 66 x 97 cm (26-inch x 38-inch sheet) of 0.53 cm (0.21-inch) polyvinylchloride (PVC), supplied by Empire Ptastics. The PVC sheet was cut in the grain long direction. A sheets 69 x 99 cm (27-inch x 39-inch) of 50.8 µm (2-mil) polyester was placed over the Teslin sheet to act as a release liner. This construction was placed between two 69 x 99 cm (27" x 39") x 762 µm (30mil) polished stainless steel metal plate. An identical polyester/treated Teslin sheet/PVC lay-up was placed on top of a stainless plate from the existing construction. A polished metal plate was placed over the exposed polyester release liner. The pattern was repeated six more times so that seven pre-pressed multi-layer plys existed in the stack. The resultant stack was then placed between two 69 x 99 cm (27" x 39") x 3.175 mm (125mil) un-polished non-corrosive metal plates. This entire construction, referred to as a book, was placed in a 200-Ton Wabash laminating press, preheated to 149°C (300°F). The composite construction was compression laminated at a pressure of 6.2 x 10⁵ Pas (90psi) for 7minutes at a temperature of 149°C (300°F). While under press, the platens were cooled to less than 38°C (100°F) which took approximately 26minutes. After being removed from the press, all seven composite sheets were removed from the book. All seven finished composite sheets had good integrity; any attempt to delaminate destroyed the Teslin layer, which demonstrated a good adhesive and seamless bond between the Teslin and the PVC ISO7910 ID-1 cards were die cut from the each of the 66 x 97 cm (26-inch x 38-inch) x 775 µm (30.5mil) composite sheets. The finished cards from each composite sheet had good integrity and good lat flat. Any attempt to delaminate destroyed the Teslin layer, which demonstrated a good adhesive and seamless bond between the Teslin and the PVC.

### Example 17 - (7 Composite Sheets/Book, Other Process Conditions)

Sheets 66 x 97 cm (26-inch x 38-inch) of treated Teslin substrate 267 µm (10.5mils) thick, were cut from a master roll in the grain long direction. The Teslin had been coated with 3 passes on each side (3x3) using the same coating composition as described in example 1 and the same Flexographic coating technology described in example 2. One coated Teslin sheet was placed on top of one 66 x 97 cm (26-inch x 38-inch) sheet of 0.53 cm (0.21-inch) polyvinylchloride (PVC), supplied by Empire Plastics. The PVC sheet was cut in the grain long direction. A sheet 69 x 99 cm (27-inch x 39-inch) of 50.8 µm (2-mil) clear polyester was placed over the Teslin sheet to act as a release liner. This construction was placed between two 69 x 99 cm (27" x 39") x 762 µm (30 mil) polished stainless steel metal plate. An identical polyester/treated Teslin sheet/PVC lay-up was placed on top of a stainless plate from the existing construction. A polished metal plate was placed over the exposed polyester release liner. The pattern was repeated six more times so that seven pre-pressed multi-layer plys existed in the stack. The resultant stack was then placed between two 69 x 99 cm (27" x 39") x 3.175 mm (125mil) un-polished non-corrosive metal plates. This entire construction, referred to as a book, was placed in a 200-Ton Wabash laminating press, preheated to 149°C (300°F). The composite construction was compression laminated at a pressure of 17.23 x 10⁵ Pas (250psi) for 7 minutes at a temperature of 149°C (300°F). While under press, the platens were cooled to less than 38°C (100°F), which took approximately 26minutes. After being removed from the press, all seven composite sheets were removed from the book. All seven finished composite sheets had good integrity; any attempt to delaminate destroyed the Teslin layer, which demonstrated a good adhesive and seamless bond between the Teslin and the PVC ISO7910 ID-1 cards were die cut from the each of the 66 x 97 cm (26-inch x 38-inch) x 775 µm (30.5mil) composite sheets. The finished cards from each composite sheet had good integrity and good lat flat. Any attempt to delaminate destroyed the Teslin layer, which demonstrated a good adhesive and seamless bond between the Teslin and the PVC.

### Example 18 - (7 Composite Sheets/Book, Other Process Conditions - failed)

Sheets 66 x 97 cm (26-inch x 38-inch) of treated Teslin substrate, 267 µm (10.5mils) thick, were cut from a master roll in the grain long direction. The Teslin had been coated with 3 passes on each side (3x3) using the same coating composition as described in example 2. One coated Teslin sheet was placed on top of one 66 x 97 cm (26-inch x 38-inch) sheet of 0.53 cm (0.21-inch) polyvinylchloride (PVC), supplied by Empire Plastics. The PVC sheet was cut in the grain long direction. A sheet 69 x 99 cm (27-inch x 39-inch) of 50.8 µm (2-mil) clear polyester was placed over the Teslin sheet to act as a release liner. This construction was placed between two 69 x 99 cm (27" x 39") x 762 µm (30mil) polished stainless steel metal plate. An identical polyester/treated Teslin sheet/PVC lay-up was placed on top of a stainless plate from the existing construction. A polished metal plate was placed over the exposed polyester release liner. The pattern was repeated six more times so that seven pre-pressed multi-layer plys existed in the stack. The resultant stack was then placed between two 69 x 99 cm (27" x 39") x 3.175 mm (125mil) un-polished non-corrosive metal plates. This entire construction, referred to as a book, was placed in a 200-Ton Wabash laminating press, preheated to 93°C (200°F). The composite construction was compression laminated at a pressure of 6.2 x 10⁵ Pas (90psi) for 7minutes at a temperature of 93°C (200°F). While under press, the platens were cooled to less than 38°C (100°F) ,which took approximately 20minutes. After being removed from the press, all seven composite sheets were removed from the book. The Teslin/PVC were pealed apart, indicating lack of bond strength. No attempt to fabricate IS07910 ID-1 cards was made.

### Example 19 - (12 Composite Sheets/Book, Other Process Conditions)

Sheets 51 x 63.5 cm (20-inch x 25-inch) of treated Teslin substrate 267 µm (10.5mils) thick, were cut from a master roll in the grain long direction. The Teslin had been coated with 3 passes on each side (3x3) using the same coating composition as described in example 1 and the same Flexographic coating technology described in example 2. One coated Teslin sheet was placed on top of one 51 x 63.5 cm (20-inch x 25-inch) sheet of 0.254 cm (0.10-inch) polyvinylchloride (PVC), supplied by Empire Plastics. The PVC sheet was cut in the grain long direction. Below the PVC ply was a second ply of 51 x 63.5 cm (20-inch x 25-inch) x 254 µm (10mil PVC), cut grain short. Below the 254 µm (10mil) PVC grain short ply was a 51 x 63.5 cm (20-inch x 25-inch) x 50.8 µm (2mil) PVC sheet cut grain long. A sheet 53 x 66 cm (21-inch x 26-inch) of 50.8 µm (2-mil) clear polyester was placed over the Teslin sheet to act as a release liner. This construction was placed between two 53 x 66 cm (21" x 26") x 762 µm (30mil) polished stainless steel metal plate. An identical polyester/treated Teslin sheet/PVC/PVC/PVC lay-up was placed on top of a stainless plate from the existing construction. A polished metal plate was placed over the exposed polyester release liner. The pattern was repeated ten more times so that twelve pre-pressed multi-layer plys existed in the stack. The resultant stack was placed between buffer pads. The buffer pads are a combination polyamide fiber and mechanical rubber, manufactured and supplied by Yamauchi Corporation, designed to more uniformally distribute temperature and press during thermal lamination. The resultant stack plus buffer pads was then placed between two slightly larger 3.175 cm (125 mil) un-polished non-corrosive metal plates. This entire construction referred to as a book, was placed in a TMP laminating press, preheated to 149°C (300°F). The composite construction was compression laminated at a pressure of 14 x 10⁵ Pas (203 psi) for 18minutes at a temperature of 149°C (300°F). While under press, the platens were cooled to less than 38°C (100°F), which took approximately 19minutes. After being removed from the press, all twelve composite sheets were removed from the book. All twelve finished composite sheets had good integrity; any attempt to delaminate destroyed the Teslin layer, which demonstrated a good adhesive and seamless bond between the Teslin and the PVC. ISO7910 ID-1 cards were die cut from the each of the 51 x 63.5 cm (20-inch 25-inch) x 775 µm (30.5mil) composite sheets. The finished cards from each composite sheet had good integrity and good lat flat. Any attempt to delaminate destroyed the Teslin layer, which demonstrated a good adhesive and seamless bond between the Teslin and the PVC.

This foregoing example was also conducted using Teslin SP1000 which produced the same results as the Teslin TS1000.

### Example 20 - (12 Composite Sheets/Book, Other Process Conditions)

Sheets 51 x 63.5 cm (20-inch x 25-inch) of treated Teslin substrate 267 µm (10.5mils) thick, were cut from a master roll in the grain long direction. The Teslin had been coated with 3 passes on each side (3x3) using the same coating composition as described in example 1 and the same Flexographic coating technology described in example 2. One coated Teslin sheet was placed on top of one 51 x 63.5 cm (20-inch x 25-inch) sheet of 0.254 cm (0.10-inch) polyvinylchloride (PVC), supplied by Empire Plastics. The PVC sheet was cut in the grain long direction. Below the PVC ply was a second ply of 51 x 63.5 cm (20-inch x 25-inch) x 254 µm (10mil) PVC, cut grain short. Below the 10mil PVC grain short ply was a 51 x 63.5 cm (20-inch x 25-inch) x 50.8 µm (2 mil) PVC sheet cut grain long. A sheet 53 x 66 cm (21-inch x 26-inch) of 50.8 µm (2-mil) clear polyester was placed over the Teslin sheet to act as a release liner. This construction was placed between two 53 x 66 cm (21" x 26") x 762 µm (30mil) polished stainless steel metal plate. An identical polyester/treated Teslin sheet/PVC/PVC/PVC lay-up was placed on top of a stainless plate from the existing construction. A polished metal plate was placed over the exposed polyester release liner. The pattern was repeated ten more times so that twelve pre-pressed multi-layer plys existed in the stack. The resultant stack was placed between buffer pads. The resultant stack plus buffer pads was then placed between two slightly larger 3.175 cm (125mil) un-polished non-corrosive metal plates. This entire construction referred to as a book, was placed in a TMP laminating press, preheated to 121°C (250°F). The composite construction was compression laminated at a pressure of 14 x 10⁵ Pas (203psi) for 18minutes at a temperature of 121°C (250°F). While under press, the platens were cooled to less than 38°C (100°F) which took approximately 17minutes. After being removed from the press, all twelve composite sheets were removed from the book. The PVC plys from all twelve finished composite sheets were pealed apart. None of the Teslin plys could be delaminated from the adjacent PVC sheet, indicating a good adhesive and seamless bond between the Teslin and the PVC. Since the PVC plys did not laminate, no attempt to fabricate ISO7910 ID-1 cards was made.

### Example 21 - (12 Composite Sheets/Book, Other Lav-up Pattern and Process Conditions)

Sheets 51 x 63.5 cm (20-inch x 25-inch) of treated Teslin substrate, 267 µm (0.5mils) thick, were cut from a master roll in the grain short direction. The Teslin had been coated with 3 passes on each side (3x3) using the same coating composition as described in example 1 and the same Flexographic coating technology described in example 2. One coated Teslin sheet was placed on top of one 51 x 63.5 cm (20-inch x 25-inch) sheet of 0.254 cm (0.10-inch) polyvinylchloride (PVC), supplied by Empire Plastics. The PVC sheet was cut in the grain short direction. Below the PVC ply was a second ply of 51 x 63.5 cm (20-inch x 25-inch) x 254 µm (10mil) PVC, cut grain long. Below the 254 µm (10mil) PVC grain short ply was a 51 x 63.5 cm (20-inch x 25-inch) x 50.8 µm (2mil) PVC sheet cut grain long. A sheet 53 x 66 cm (21-inch x 26-inch) of 50.8 µm (2-mil) clear polyester was placed over the Teslin sheet to act as a release liner. This construction was placed between two 53 x 66 cm (21" x 26") x 762 µm (30mil) polished stainless steel metal plate. An identical polyester/treated Teslin sheet/PVC/PVC/PVC lay-up was placed on top of a stainless plate from the existing construction. A polished metal plate was placed over the exposed polyester release liner. The pattern was repeated ten more times so that twelve pre-pressed multi-layer plys existed in the stack. The resultant stack was placed between buffer pads. The resultant stack plus buffer pads was then placed between two slightly larger 3.175 cm (125mil) un-polished non-corrosive metal plates. This entire construction referred to as a book, was placed in a TMP laminating press, preheated to 149°C (300°F). The composite construction was compression laminated at a pressure of 14 x 10⁵ Pas (203 psi) for 18 minutes at a temperature of 149°C (300°F). While under press, the platens were cooled to less than 38°C (100°F) which took approximately 19minutes. After being removed from the press, all twelve composite sheets were removed from the book. All twelve finished composite sheets had good integrity; any attempt to delaminate destroyed the Teslin layer, which demonstrated a good adhesive and seamless bond between the Teslin and the 7PVC ISO7910 ID-1 cards were die cut from the each of the 52 x 63.5 cm (20-inch x 25-inch) x 775 µm (30.5mil) composite sheets. The finished cards from each composite sheet had good integrity and good lat flat. Any attempt to delaminate destroyed the Teslin layer, which demonstrated a good adhesive and seamless bond between the Teslin and the PVC.

### Example 22 - (12 Composite Sheets/Book, Other Lay-up Pattern and Process Conditions-failed)

Sheet 51 x 63.5 cm (20-inch x 25-inch) of treated Teslin substrate, 267 µm (10.5 mils) thick, were cut from a master roll in the grain short direction. The Teslin had been coated with 3 passes on each side (3x3) using the same coating composition as described in example 1 and the same Flexographic coating technology described in example 2. One coated Teslin sheet was placed on top of one 51 x 63.5 cm (20-inch x 25-inch) sheet of 0.254 cm (0.10-inch) polyvinylchloride (PVC), supplied by Empire Plastics. The PVC sheet was cut in the grain short direction. Below the PVC ply was a second ply of 51 x 63.5 cm (20-inch x 25-inch) x 254 µm (10mil) PVC, cut grain long. Below the 254 µm (10mil) PVC grain short ply was a 51 x 63.5 cm (20-inch x 25-inch) x 50.8 µm (2-mil) PVC sheet cut grain long. A sheet 53 x 66 cm (21-inch x 26-inch) of 50.8 µm (2-mil) clear polyester was placed over the Teslin sheet to act as a release liner. This construction was placed between two 53 x 66 cm (21" x 26") x 762 µm (30mil) polished stainless steel metal plate. An identical polyester/treated Teslin sheet/PVC/PVC/PVC lay-up was placed on top of a stainless plate from the existing construction. A polished metal plate was placed over the exposed polyester release liner. The pattern was repeated ten more times so that twelve pre-pressed multi-layer plys existed in the stack. The resultant stack was placed between buffer pads. The resultant stack plus buffer pads was then placed between two slightly larger 3.175 cm (125mil) un-polished non-corrosive metal plates. This entire construction, referred to as a book, was placed in a TMP laminating press, preheated to 121°C (250°F). The composite construction was compression laminated at a pressure of 14 x 10⁵ Pas (203psi) for 18 minutes at a temperature of 121°C (250°F). While under press, the platens were cooled to less than 38°C (100°F) which took approximately 17minutes. After being removed from the press, all twelve composite sheets were removed from the book. The PVC plys from all twelve finished composite sheets were pealed apart. None of the Teslin plys could be delaminated from the adjacent PVC sheet, indicating a good adhesive and seamless bond between the Teslin and the PVC. Since the PVC plys did not laminate, no attempt to fabricate ISO7910 ID-1 cards was made.

### Example 23 - (12 Composite Sheets/Book, Magnetic Stripe Version)

Sheets 51 x 63.5 cm (20-inch x 25-inch) of treated Teslin substrate, 267 µm (10.5mils) thick, were cut from a master roll in the grain long direction. The Teslin had been coated with 3 passes on each side (3x3) using the same coating composition as described in example 1 and the same Flexographic coating technology described in example 2. One coated Teslin sheet was placed on top of one 51 x 63.5 cm (20-inch x 25-inch) sheet of 0.254 cm (0.10-inch) polyvinylchloride (PVC), supplied by Empire Plastics. The PVC sheet was cut in the grain long direction. Below the PVC ply was a second ply of 51 x 63.5 cm (20-inch x 25-inch) x 10mil PVC, cut grain short. Below the 254 µm (10mil) PVC grain short ply was a 51 x 63.5 cm (20-inch x 25-inch) x 2mil PVC Magnetic Stripe master sheet, fabricated with the magnetic stripe running parallel to the short 51 cm (20") dimension of the sheet. The magnetic stripes were 3 level, 2750 coercivity type. A sheet 53 x 66 cm (21-inch x 26-inch) of 50.8 µm (2-mil) clear polyester was placed over the Teslin sheet to act as a release liner. This construction was placed between two 53 x 66 or (21" x 26") x 762 µm (30mil) polished stainless steel metal plate. An identical polyester/treated Teslin sheet/PVC/PVC/magnetic stripe master sheet lay-up was placed on top of a stainless plate from the existing construction. A polished metal plate was placed over the exposed polyester release liner. The pattern was repeated ten more times so that twelve pre-pressed multi-layer plys existed in the stack. The resultant stack was placed between buffer pads. The resultant stack plus buffer pads was then placed between two slightly larger 3.125 cm (125mil) un-polished non-corrosive metal plates. This entire construction, referred to as a book, was placed in a TMP laminating press, preheated to 149°C (300°F). The composite construction was compression laminated at a pressure of 14 x 10⁵ Pas (203psi) for 18minutes at a temperature of 149°C (300°F). While under press, the platens were cooled to less than 38°C (100°F) which took approximately 19minutes. After being removed from the press, all twelve composite sheets were removed from the book. All twelve finished composite sheets had good integrity; any attempt to delaminate destroyed the Teslin layer, which demonstrated a good adhesive and seamless bond between the Teslin and the PVC. ISO7910 ID-1 cards were die cut from the each of the 51 x 63.5 cm (20-inch x 25-inch) x 775 µm (30.5mil) composite sheets. The finished cards from each composite sheet had good integrity and good lat flat. Any attempt to delaminate destroyed the Teslin layer, which demonstrated a good adhesive and seamless bond between the Teslin and the PVC.

### Example 24 - (12 Composite Sheets/Book, Magnetic Stripe Version)

Sheets 51 x 63.5 cm (20-inch x 25-inch) of treated Teslin substrate, 267 µm (10.5mils) thick, were cut from a master roll in the grain short direction. The Teslin had been coated with 3 passes on each side (3x3) using the same coating composition as described in example 1 and the same Flexographic coating technology described in example 2. One coated Teslin sheet was placed on top of one 51 x 63.5 cm (20-inch x 25-inch) sheet of 0.254 cm (0.10-inch) polyvinylchloride (PVC), supplied by Empire Plastics. The PVC sheet was cut in the grain short direction. Below the PVC ply was a second ply of 51 x 63.5 cm (20-inch x 25-inch) x 252 µm (10mil) PVC, cut grain long. Below the 254 µm (10 mil) PVC grain short ply was a 51 x 63.5 cm (20-inch x 25-inch) x 50.8 µm (2 mil) PVC Magnetic Stripe master sheet, fabricated with the magnetic stripe running parallel to the short 51 cm (20") dimension of the sheet. The magnetic stripes were 3 level, 2750 coercivity type. A sheet 53 x 66 cm (21-inch x 26-inch) of (2-mil) clear polyester was placed over the Teslin sheet to act as a release liner. This construction was placed between two 53 x 66 cm (21" x 26") x 762 µm (30mil) polished stainless steel metal plate. An identical polyester/treated Teslin sheet/PVC/PVC/magnetic stripe master sheet lay-up was placed on top of a stainless plate from the existing construction. A polished metal plate was placed over the exposed polyester release liner. The pattern was repeated ten more times so that twelve pre-pressed multi-layer plys existed in the stack. The resultant stack was placed between buffer pads. The resultant stack plus buffer pads was then placed between two slightly larger 3.125 cm (125mil) un-polished non-corrosive metal plates. This entire construction referred to as a book, was placed in a TMP laminating press, preheated to 149°C (300°F). The composite construction was compression laminated at a pressure of 14 x 10⁵ Pas (203 psi) for 18minutes at a temperature of 149°C (300°F). While under press, the platens were cooled to less than 38°C (100°F) which took approximately 19minutes. After being removed from the press, all twelve composite sheets were removed from the book. All twelve finished composite sheets had good integrity; any attempt to delaminate destroyed the Teslin layer, which demonstrated a good adhesive and seamless bond between the Teslin and the PVC. ISO7910 ID-1 cards were die cut from the each of the 51 x 63.5 cm (20-inch x 25-inch) x 775 µm (30.5mil) composite sheets. The finished cards from each composite sheet had good integrity and good lat flat. Any attempt to delaminate destroyed the Teslin layer, which demonstrated a good adhesive and seamless bond between the Teslin and the PVC.

### Example 25 - (12 Composite Sheets/Book, Magnetic Stripe Version- failed)

Sheets 51 x 63.5 cm (20-inch x 25-inch) of treated Teslin substrate 267 µm (10.5mils) thick, were cut from a master roll in the grain long direction. The Teslin had been coated with 3 passes on each side (3x3) using the same coating composition as described in example 1 and the same Flexographic coating technology described in example 2. One coated Teslin sheet was placed on top of one 51 x 63.5 cm inch x 25-inch) sheet of 0.254 cm (0.10-inch) polyvinylchloride (PVC), supplied by Empire Plastics. The PVC sheet was cut in the grain long direction. Below the PVC ply was a second ply of 51 x 63.5 cm (20-inch x 25-inch) x 0.254 cm (10mil) PVC, cut grain short. Below the 254 µm (10mil) PVC grain short ply was a 51 x 63.5 cm (20-inch x 25-inch) x 50.8 µm (2mil) PVC Magnetic Stripe master sheet, fabricated with the magnetic stripe running parallel to the short 51 cm (20") dimension of the sheet. The magnetic stripes were 3 level, 2750 coercivity type. A sheet 53 x 56 cm (21-inch x 26-inch) of 50.8 µm (2-mil) clear polyester was placed over the Teslin sheet to act as a release liner. This construction was placed between two 53 x 66 cm (21" x 26-) x 762 µm (30mil) polished stainless steel metal plate. An identical polyester/treated Teslin sheet/PVC/PVC/magnetic stripe master sheet lay-up was placed on top of a stainless plate from the existing construction. A polished metal plate was placed over the exposed polyester release liner. The pattern was repeated ten more times so that twelve pre-pressed multi-layer plys existed in the stack. The resultant stack was placed between buffer pads. The resultant stack plus buffer pads was then placed between two slightly larger 3.125 cm (125mil) un-polished non-corrosive metal plates. This entire construction, referred to as a book, was placed in a TMP laminating press, preheated to 121°C (250°F). The composite construction was compression laminated at a pressure of 14 x 10⁵ Pas (203psi) for 18minutes at a temperature of 121°C (250°F). While under press, the platens were cooled to less than 38°C (100°F) which took approximately 17minutes. After being removed from the press, all twelve composite sheets were removed from the book. The PVC plys from all twelve finished composite sheets were pealed apart. None of the Teslin plys could be delaminated from the adjacent PVC sheet, indicating a good adhesive and seamless bond between the Teslin and the PVC. Since the PVC plys did not laminate, no attempt to fabricate IS07910 ID-1 cards was made.

### Example 26 (Conditioning of Cards/Comoosite Sheets)

Cards fabricated according to example 19, were individually soaked in deionized water for 15minutes then allowed air dry for 24 hours. Resultant conditioned cards demonstrated easier separation from a stack and slip characteristics compared to the unconditioned version.

### Example 27 (Conditioning of Cards/Composite Sheets)

Cards fabricated according to example 19, were individually conditioned at 75% RH and 25C for 16hours. Resultant conditioned cards demonstrated easier separation from a stack and slip characteristics compared to the unconditioned version.

### Example 28 (Conditioning of Cards/Composite Sheets)

Cards fabricated according to example 19, were conditioned at 75% RH and 25C for 16hours in a stack. Resultant conditioned cards did not demonstrated easier separation from a stack and slip characteristics compared to the unconditioned version.

### Example 29 (Conditioning of Cards/Composite Sheets)

Composite sheets fabricated according to example 19, were individually soaked in deionized water for 15 minutes then allowed air dry for 24 hours. ISO7910 ID-1 cards were die cut from the each of the 51 x 63.5 cm (20-inch x 25-inch) x 775 µm (30.5mil) composite sheets. The finished cards from each composite sheet had good integrity and good lat flat. Any attempt to delaminate destroyed the Teslin layer, which demonstrated a good adhesive and seamless bond between the Teslin and the PVC. Resultant conditioned cards demonstrated easier separation from a stack and slip characteristics compared to the unconditioned version.
The following table compares the optical density retention performance of the new offering (8181-67-09 recipe) to standard IJ1000WP (2 component recipe). Test print patterns used in this study were produced off of an HP970 color inkjet printer, set on best quality and photo grade ink jet glossy paper.

**Optical Density following De-lonized Water Soak**

| | Soak Time (hrs) | Composite Black | Cyan | Magenta | Yellow | Pigmented Black |
|---|---|---|---|---|---|---|
| Std. Teslin IJ1000WP | 0 | 1.26 | 1.2 | 1.18 | 0.86 | 1.25 |
| | 24 | 1.21 | 1.13 | 1.03 | 0.74 | 1.19 |
| | 96 | 1.18 | 1.08 | 1.03 | 0.71 | 1.17 |
| New Teslin IJ1000WP (8181-67-09) | 0 | 1.39 | 1.33 | 1.22 | 0.91 | 1.37 |
| | 24 | 1.39 | 1.35 | 1.29 | 0.92 | 1.37 |
| | 96 | 1.39 | 1.32 | 1.31 | 0.92 | 1.36 |

## Claims

1. A substantially water-resistant ink jet recordable substrate coating composition comprising:
a. an aqueous polyurethane dispersion;
b. a cationic nitrogen-containing polymeric dye fixative compound; and
c. an acrylic polymer,
wherein said coating composition has a pH of 7 or less.

2. The coating composition of claim 1 wherein said polyurethane dispersion is chosen from anionic polymers, cationic and nonionic polyurethanes dispersible in water.

3. The coating composition of claim 1 wherein said polyurethane dispersion comprises a polyisocyanate and a polyol.

4. The coating composition of claim 1 wherein said polyurethane dispersion contains from 1 weight percent to less than 70 weight percent of polyurethane.

5. The coating composition of claim 1 wherein said cationic nitrogen-containing polymeric dye fixative compound has a pH of 7 or less.

6. The coating composition of claim 1 wherein said cationic nitrogen-containing polymeric dye fixative compound comprises an aqueous mixture containing from 5 weight percent to 50 weight percent or less of a nitrogen-containing polymer.

7. The coating composition of claim 1 wherein said cationic nitrogen-containing polymeric dye fixative compound comprises polyamine and epichlorohydrin.

8. The coating composition of claim 1 wherein said acrylic polymer comprises a cationic acrylic polymer.

9. The coating composition of claim 8 wherein said cationic acrylic polymer is chosen from polyacrylates, polymethacrylates, polyacrylonitriles and polymers having monomer types selected from acrylonitrile, acrylic acid, acrylamide and mixtures thereof.

10. The coating composition of claim 8 wherein said cationic acrylic polymer has a number average molecular weight of from 1500 to 8150, preferably from 2900 to 7125.

11. The coating composition of claim 1 wherein said composition comprises from 20 to 75 weight percent of said aqueous polyurethane dispersion, from 5 to 75 weight percent of said cationic nitrogen-containing polymeric dye fixative compound, and from 1 to 75 weight percent of said acrylic polymer, based on total weight of said coating composition.

12. A method of preparing a substantially water-resistant ink jet recordable substrate coating composition comprising the step of mixing a nitrogen-containing polymeric dye fixative compound with an aqueous polyurethane dispersion and an acrylic polymer to produce a substantially homogeneous mixture having a pH of 7 or less.

13. The method of claim 12 wherein said polyurethane dispersion, said nitrogen-containing polymeric dye fixative compound and said acrylic polymer is defined as in any of claims 2 to 11.

14. A substantially water-resistant ink jet recordable substrate at least partially coated with a coating composition according to any of claims 1-12.

15. The ink jet recordable substrate of claim 14 wherein said substrate comprises a cellulosic-based paper.

16. The ink jet recordable substrate of claim 14 wherein said substrate comprises a microporous material.

17. The ink jet recordable substrate of claim 14 wherein said substrate comprises a matrix containing polyolefin; a siliceous filler, and a porous structure.

18. The ink jet recordable substrate of claim 17 wherein said substrate has a porosity of at least 35 percent by volume of said substrate.

19. The ink jet recordable substrate of claim 17 wherein said polyolefin is chosen from polyethylene, polypropylene and mixtures thereof.

20. The ink jet recordable substrate of claim 19 wherein said polyethylene comprises a linear high molecular weight polyethylene having an intrinsic viscosity of at least 10 deciliters/gram and said polypropylene comprises a linear high molecular weight polypropylene having an intrinsic viscosity of at least 5 deciliters/gram.

21. The ink jet recordable substrate of claim 17 wherein said siliceous filler is chosen from silica, mica, montmorillonite, kaolinite, asbestos, talc, diatomaceous earth, vermiculite, natural and synthetic zeolites, cement, calcium silicate, aluminum silicate, sodium aluminum silicate, aluminum polysilicate, alumina silica gels, glass particles and mixtures thereof.

22. The ink jet recordable substrate of claim 21 wherein said siliceous filler is chosen from precipitated silica, silica gel or fumed silica.

23. The ink jet recordable substrate of claim 14 wherein said coating composition is applied to said substrate such that said substrate has a coating thickness of from 1 to 40 microns.

24. The ink jet recordable substrate of claim 14 further comprising at least one layer of a substantially nonporous material bonded to said substrate.

25. The ink jet recordable substrate of claim 24 wherein said substantially nonporous material is chosen from substantially nonporous thermoplastic polymers, substantially nonporous metalized thermoplastic polymers, substantially nonporous thermoset polymers, substantially nonporous elastomerics, substantially nonporous metals, and mixtures thereof.

26. A method of preparing an at least partially coated substantially water-resistant ink jet recordable substrate comprising the steps of:
a. providing an ink jet recordable substrate having at least one side,
b. at least partially applying the coating composition according to any of claims 1-12 to at least one side of said ink jet recordable substrate.

27. The method of claim 26 wherein said substrate is defined as in any of claims 15 to 22.

28. The method of claim 26 wherein said coating composition is applied to said substrate such that said substrate has a coating thickness of from 1 to 40 microns.

29. The method of claim 26 further comprising bonding said substrate to at least one layer of a substantially nonporous material.

30. The method of claim 29 wherein said substantially nonporous material is chosen from substantially nonporous thermoplastic polymers, substantially nonporous metalized thermoplastic polymers, substantially nonporous thermoset polymers, substantially nonporous elastomerics, substantially nonporous metals, and mixtures thereof.

31. The method of claim 26 further comprising the step of drying the coated ink jet recordable substrate by applying a temperature of from ambient to 177°C (350°F).

32. A coated microporous substrate comprising:
a. a microporous substrate having an upper surface and a lower surface comprising:
(i) a polyolefin;
(ii) a siliceous filler;
(iii) a porosity such that pores constitute at - least 35 percent by volume of said microporous substrate; and
b. a coating derived from a coating composition according to any of claims 1 to 12 at least partially applied to at least one surface of said microporous substrate.

33. A multilayer article comprising an ink jet recordable substrate at least partially connected to a substantially nonporous material, said ink jet recordable substrate at least partially coated with a substantially water-resistant coating composition according to any of claims 1-12.

34. The multilayer article of claim 33 further comprising a friction-reducing coating composition wherein at least one of said ink jet recordable substrate and substantially nonporous material is at least partially coated with said friction-reducing coating composition.

35. A method for producing a multilayer article comprising the steps of:
a. providing an ink jet recordable substrate having a top surface and a bottom surface;
b. at least partially applying a coating composition according to any of claims 1 to 12 to at least one surface of said ink jet recordable substrate;
c. at least partially connecting said ink jet recordable substrate of (b) to a substantially nonporous material having a top surface and a bottom surface; and
d. at least partially applying a friction-reducing coating composition to at least one surface of at least one of said ink jet recordable substrate and said substantially nonporous material.

## Patentansprüche

1. Beschichtungszusammensetzung zur Erzeugung eines im Wesentlichen wasserbeständigen durch Inkjet-Druck beschreibbaren Substrats, enthaltend:
a. eine wässrige Polyurethandispersion,
b. eine kationische stickstoffhaltige polymere Verbindung zur Farbstofffixierung und
c. ein Acrylpolymer,
wobei diese Beschichtungszusammensetzung einen pH von 7 oder weniger aufweist.

2. Beschichtungszusammensetzung nach Anspruch 1, wobei diese Polyurethandispersion aus anionischen Polymeren, kationischen und nichtionischen Polyurethanen, die in Wasser dispergierbar sind, ausgewählt ist.

3. Beschichtungszusammensetzung nach Anspruch 1, wobei diese Polyurethandispersion ein Polyisocyanat und ein Polyol enthält.

4. Beschichtungszusammensetzung nach Anspruch 1, wobei diese Polyurethandispersion 1 Gew.-% bis weniger als 70 Gew.-% Polyurethan enthält.

5. Beschichtungszusammensetzung nach Anspruch 1, wobei diese kationische stickstoffhaltige polymere Verbindung zur Farbstofffixierung einen pH von 7 oder weniger aufweist.

6. Beschichtungszusammensetzung nach Anspruch 1, wobei diese kationische stickstoffhaltige polymere Verbindung zur Farbstofffixierung eine wässrige Mischung enthält, die 5 Gew.-% bis 50 Gew.-% oder weniger eines stickstoffhaltigen Polymers aufweist.

7. Beschichtungszusammensetzung nach Anspruch 1, wobei diese kationische stickstoffhaltige polymere Verbindung zur Farbstofffixierung Polyamin und Epichlorhydrin enthält.

8. Beschichtungszusammensetzung nach Anspruch 1, wobei dieses Acrylpolymer ein kationisches Acrylpolymer enthält.

9. Beschichtungszusammensetzung nach Anspruch 8, wobei dieses kationische Acrylpolymer ausgewählt ist aus Polyacrylaten, Polymethacrylaten, Polyacrylnitrilen und Polymeren mit Monomertypen, die ausgewählt sind aus Acrylnitril, Acrylsäure, Acrylamid und Mischungen davon.

10. Beschichtungszusammensetzung nach Anspruch 8, wobei dieses kationische Acrylpolymer ein zahlenmittleres Molekulargewicht von 1500 bis 8150, vorzugsweise von 2900 bis 7125, aufweist.

11. Beschichtungszusammensetzung nach Anspruch 1, wobei diese Zusammensetzung 20 bis 75 Gew.-% dieser wässrigen Polyurethandispersion, 5 bis 75 Gew.-% dieser kationischen stickstoffhaltigen polymeren Verbindung zur Farbstofffixierung und 1 bis 75 Gew.-% dieses Acrylpolymers, bezogen auf das Gesamtgewicht dieser Beschichtungszusammensetzung, enthält.

12. Verfahren zur Herstellung einer Beschichtungszusammensetzung für ein im Wesentlichen wasserbeständiges durch Inkjet-Druck beschreibbares Substrat, umfassend den Schritt des Mischens einer stickstoffhaltigen polymeren Verbindung zur Farbstofffixierung mit einer wässrigen Polyurethandispersion und einem Acrylpolymer, um eine im Wesentlichen homogene Mischung mit einem pH von 7 oder weniger herzustellen.

13. Verfahren nach Anspruch 12, wobei diese Polyurethandispersion, diese stickstoffhaltige polymere Verbindung zur Farbstofffixierung und dieses Acrylpolymer wie in einem der Ansprüche 2 bis 11 definiert sind.

14. Ein im Wesentlichen wasserbeständiges durch Inkjet-Druck beschreibbares Substrat, das wenigstens partiell mit einer Beschichtungszusammensetzung nach einem der Ansprüche 1-12 beschichtet ist.

15. Durch Inkjet-Druck beschreibbares Substrat nach Anspruch 14, wobei dieses Substrat ein Papier auf Cellulosebasis enthält.

16. Durch Inkjet-Druck beschreibbares Substrat nach Anspruch 14, wobei dieses Substrat ein mikroporöses Material enthält.

17. Durch Inkjet-Druck beschreibbares Substrat nach Anspruch 14, wobei dieses Substrat eine polyolefinhaltige Matrix, einen siliciumhaltigen Füllstoff und eine poröse Struktur enthält.

18. Durch Inkjet-Druck beschreibbares Substrat nach Anspruch 17, wobei dieses Substrat eine Porosität von wenigstens 35 Vol.-% dieses Substrats aufweist.

19. Durch Inkjet-Druck beschreibbares Substrat nach Anspruch 17, wobei dieses Polyolefin ausgewählt ist aus Polyethylen, Polypropylen und Mischungen davon.

20. Durch Inkjet-Druck beschreibbares Substrat nach Anspruch 19, wobei dieses Polyethylen ein lineares Polyethylen mit hohem Molekulargewicht und einer Grenzviskositätszahl von wenigstens 10 dl/g enthält und dieses Polypropylen ein lineares Polypropylen mit hohem Molekulargewicht und einer Grenzviskositätszahl von wenigstens 5 dl/g enthält.

21. Durch Inkjet-Druck beschreibbares Substrat nach Anspruch 17, wobei dieser siliciumhaltige Füllstoff ausgewählt ist aus Siliciumdioxid, Glimmer, Montmorillonit, Kaolinit, Asbest, Talk, Diatomeenerde, Vermiculit, natürlichen und synthetischen Zeolithen, Zement, Calciumsilicat, Aluminiumsilicat, Natriumaluminiumsilicat, Aluminiumpolysilicat, Aluminiumoxid/Siliciumoxid-Gelen, Glasteilchen und Mischungen davon.

22. Durch Inkjet-Druck beschreibbares Substrat nach Anspruch 21, wobei dieser siliciumhaltige Füllstoff ausgewählt ist aus Fällungskieselsäure, Silicagel oder pyrogener Kieselsäure.

23. Durch Inkjet-Druck beschreibbares Substrat nach Anspruch 14, wobei diese Beschichtungszusammensetzung auf dieses Substrat so aufgebracht wird, dass dieses Substrat eine Beschichtungsdicke von 1 bis 40 µm aufweist.

24. Durch Inkjet-Druck beschreibbares Substrat nach Anspruch 14, das weiterhin wenigstens eine Schicht eines im Wesentlichen nichtporösen Materials aufweist, das an dieses Substrat gebunden ist.

25. Durch Inkjet-Druck beschreibbares Substrat nach Anspruch 24, wobei dieses im Wesentlichen nichtporöse Material ausgewählt ist aus im Wesentlichen nichtporösen thermoplastischen Polymeren, im Wesentlichen nichtporösen metallisierten thermoplastischen Polymeren, im Wesentlichen nichtporösen wärmegehärteten Polymeren, im Wesentlichen nichtporösen Elastomeren, im Wesentlichen nichtporösen Metallen und Mischungen davon.

26. Verfahren zur Herstellung eines zumindest teilweise beschichteten im Wesentlichen wasserbeständigen durch Inkjet-Druck beschreibbaren Substrats, umfassend die Schritte:
a. Bereitstellen eines durch Inkjet-Druck beschreibbaren Substrats mit wenigstens einer Seite,
b. wenigstens teilweises Aufbringen der Beschichtungszusammensetzung nach einem der Ansprüche 1-12 auf wenigstens eine Seite dieses durch Inkjet-Druck beschreibbaren Substrats.

27. Verfahren nach Anspruch 26, wobei dieses Substrat wie in einem der Ansprüche 15 bis 22 definiert ist.

28. Verfahren nach Anspruch 26, wobei diese Beschichtungszusammensetzung auf dieses Substrat so aufgebracht wird, dass dieses Substrat eine Beschichtungsdicke von 1 bis 40 µm aufweist.

29. Verfahren nach Anspruch 26, das weiterhin das Binden dieses Substrats an wenigstens eine Schicht eines im Wesentlichen nichtporösen Materials umfasst.

30. Verfahren nach Anspruch 29, wobei dieses im Wesentlichen nichtporöse Material ausgewählt ist aus im Wesentlichen nichtporösen thermoplastischen Polymeren, im Wesentlichen nichtporösen metallisierten thermoplastischen Polymeren, im Wesentlichen nichtporösen wärmegehärteten Polymeren, im Wesentlichen nichtporösen Elastomeren, im Wesentlichen nichtporösen Metallen und Mischungen davon.

31. Verfahren nach Anspruch 26, das weiterhin den Schritt des Trocknens des beschichteten durch Inkjet-Druck beschreibbaren Substrats durch Anwenden einer Temperatur von Umgebungstemperatur 177°C (350°F) umfasst.

32. Beschichtetes mikroporöses Substrat, enthaltend:
a. ein mikroporöses Substrat mit einer oberen Oberfläche und einer unteren Oberfläche, enthaltend:
(i) ein Polyolefin,
(ii) einen siliciumhaltigen Füllstoff,
(iii) eine Porosität, so dass die Poren wenigstens 35 Vol.-% dieses mikroporösen Substrats ausmachen, und
b. eine Beschichtung, die sich von einer Beschichtungszusammensetzung nach einem der Ansprüche 1 bis 12 ableitet, die wenigstens teilweise auf wenigstens einer Oberfläche dieses mikroporösen Substrats aufgebracht ist.

33. Mehrschichtiger Gegentand, der ein durch Inkjet-Druck beschreibbares Substrat, das wenigstens teilweise mit einem im Wesentlichen nichtporösen Material verbunden ist, enthält, wobei dieses durch Inkjet-Druck beschreibbare Substrat wenigstens teilweise mit einer Beschichtungszusammensetzung nach einem der Ansprüche 1-12 beschichtet ist, um es im Wesentlichen wasserbeständig zu machen.

34. Mehrschichtiger Gegentand nach Anspruch 33, der weiterhin eine reibungsreduzierende Beschichtungszusammensetzung aufweist, wobei wenigstens eines von diesem durch Inkjet-Druck beschreibbaren Substrat und dem im Wesentlichen nichtporösen Material wenigstens teilweise mit dieser reibungsreduzierenden Beschichtungszusammensetzung beschichtet ist.

35. Verfahren zur Herstellung eines mehrschichtigen Gegenstands, umfassend die Schritte:
a. Bereitstellen eines durch Inkjet-Druck beschreibbaren Substrats mit einer oberen Oberfläche und einer unteren Oberfläche,
b. wenigstens teilweises Aufbringen einer Beschichtungszusammensetzung nach einem der Ansprüche 1-12 auf wenigstens einer Oberfläche dieses durch Inkjet-Druck beschreibbaren Substrats,
c. wenigstens teilweises Verbinden dieses durch Inkjet-Druck beschreibbaren Substrats aus (b) mit einem im Wesentlichen nichtporösen Material mit einer oberen Oberfläche und einer unteren Oberfläche und
d. wenigstens teilweises Aufbringen einer reibungsreduzierenden Beschichtungszusammensetzung auf wenigstens einer Oberfläche von wenigstens einem von diesem durch Inkjet-Druck beschreibbaren Substrat und diesem im Wesentlichen nichtporösen Material.

## Revendications

1. Composition de revêtement de substrat enregistrable par jet d'encre refusant l'eau sensiblement comprenant :
a. une dispersion aqueuse de polyuréthanne;
b. un composé fixatif de colorant polymérique contenant de l'azote cationique; et
c. un polymère acrylique,
dans laquelle ladite composition de revêtement a un pH de 7 ou moins.

2. Composition de revêtement suivant la revendication 1, dans laquelle ladite dispersion de polyuréthanne est choisie parmi les polymères anioniques, les polyuréthannes cationiques et non ioniques dispersables dans l'eau.

3. Composition de revêtement suivant la revendication 1, dans laquelle la dispersion de polyuréthanne précitée comprend un polyisocyanate et un polyol.

4. Composition de revêtement suivant la revendication 1, dans laquelle la dispersion de polyuréthanne précitée contient de 1 % en poids à moins de 70 % en poids de polyuréthanne.

5. Composition de revêtement suivant la revendication 1, dans laquelle ledit composé fixatif de colorant polymérique contenant de l'azote cationique a un pH de 7 ou moins.

6. Composition de revêtement suivant la revendication 1, dans laquelle le composé fixatif de colorant polymérique contenant de l'azote cationique précité comprend un mélange aqueux contenant de 5 % en poids à 50 % en poids ou moins d'un polymère contenant de l'azote.

7. Composition de revêtement suivant la revendication 1, dans laquelle le composé fixatif de colorant polymérique contenant de l'azote cationique comprend une polyamine et de l'épichorhydrine.

8. Composition de revêtement suivant la revendication 1, dans laquelle le polymère acrylique précité comprend un polymère acrylique cationique.

9. Composition de revêtement suivant la revendication 8, dans laquelle ledit polymère acrylique cationique est choisi parmi les polyacrylates, les polyméthacrylates, les polyacrylonitriles et les polymères comportant des types de monomères choisis parmi l'acrylonitrile, l'acide acrylique, l'acrylamide et leurs mélanges.

10. Composition de revêtement suivant la revendication 8, dans laquelle le polymère acrylique cationique précité a un poids moléculaire moyen numérique de 1500 à 8150, avantageusement de 2900 à 7125.

11. Composition de revêtement suivant la revendication 1, dans laquelle ladite composition comprend de 20 à 75 % en poids de la dispersion aqueuse de polyuréthanne précitée, de 5 à 75 % en poids du composé fixatif de colorant polymérique contenant de l'azote cationique précité, et de 1 à 75 % en poids du polymère acrylique précité, par rapport au poids total de ladite composition de revêtement.

12. Procédé de préparation d'une composition de revêtement de substrat enregistrable par jet d'encre refusant l'eau sensiblement comprenant l'étape de mélange d'un composé fixatif de colorant polymérique contenant de l'azote avec une dispersion aqueuse de polyuréthanne et un polymère acrylique pour produire un mélange sensiblement homogène ayant un pH de 7 ou moins.

13. Procédé suivant la revendication 12, dans lequel la dispersion de polyuréthanne, le composé fixatif de colorant polymérique contenant de l'azote et le polymère acrylique précités sont tels que définis suivant l'une quelconque des revendications 2 à 11.

14. Substrat enregistrable par jet d'encre refusant l'eau sensiblement au moins partiellement revêtu d'une composition de revêtement suivant l'une quelconque des revendications 1 à 12.

15. Substrat enregistrable par jet d'encre suivant la revendication 14, dans lequel ledit substrat comprend un papier à base cellulosique.

16. Substrat enregistrable par jet d'encre suivant la revendication 14, dans lequel ledit substrat comprend une matière microporeuse.

17. Substrat enregistrable par jet d'encre suivant la revendication 14, dans lequel le substrat précité comprend une matrice contenant une polyoléfine, une charge siliceuse et une structure poreuse.

18. Substrat enregistrable par jet d'encre suivant la revendication 17, dans lequel ledit substrat a une porosité d'au moins 35 % en poids du substrat précité.

19. Substrat enregistrable par jet d'encre suivant la revendication 17, dans lequel la polyoléfine précitée est choisie parmi le polyéthylène, le polypropylène et leurs mélanges.

20. Substrat enregistrable par jet d'encre suivant la revendication 19, dans lequel ledit polyéthylène comprend un polyéthylène de poids moléculaire élevé linéaire ayant une viscosité intrinsèque d'au moins 10 dl/g et le polypropylène précité comprend un polypropylène de poids moléculaire élevé linéaire ayant une viscosité intrinsèque d'au moins 5 dl/g.

21. Substrat enregistrable par jet d'encre suivant la revendication 17, dans lequel la charge siliceuse précitée est choisie parmi la silice, le mica, la montmorillonite, la kaolinite, l'amiante, le talc, la terre à diatomées, la vermiculite, les zéolites naturelles et synthétiques, le ciment, le silicate de calcium, le silicate d'aluminium, le silicate de sodium-aluminium, le polysilicate d'aluminium, les gels d'alumine-silice, les particules de verre et leurs mélanges.

22. Substrat enregistrable par jet d'encre suivant la revendication 21, dans lequel ladite charge siliceuse est choisie parmi la silice précipitée, le gel de silice et la silice fumée.

23. Substrat enregistrable par jet d'encre suivant la revendication 14, dans lequel la composition de revêtement précitée est appliquée audit substrat de telle sorte que le substrat précité ait une épaisseur de revêtement de 1 à 40 microns.

24. Substrat enregistrable par jet d'encre suivant la revendication 14, comprenant de plus au moins une couche d'une matière sensiblement non poreuse liée audit substrat.

25. Substrat enregistrable par jet d'encre suivant la revendication 24, dans lequel ladite matière sensiblement non poreuse est choisie parmi les polymères thermoplastiques sensiblement non poreux, les polymères thermoplastiques métallisés sensiblement non poreux, les polymères thermodurcis sensiblement non poreux, les matières élastomères sensiblement non poreuses, les métaux sensiblement non poreux et leurs mélanges.

26. Procédé de préparation d'un substrat enregistrable par jet d'encre refusant l'eau sensiblement au moins partiellement revêtu comprenant les étapes de :
a. formation d'un substrat enregistrable par jet d'encre comportant au moins une face;
b. application au moins partielle de la composition de revêtement suivant l'une quelconque des revendications 1 à 12 à au moins une face dudit substrat enregistrable par jet d'encre.

27. Procédé suivant la revendication 26, dans lequel ledit substrat est tel que défini suivant l'une quelconque des revendications 15 à 22.

28. Procédé suivant la revendication 26, dans lequel la composition de revêtement précitée est appliquée au substrat précité de telle sorte que ledit substrat ait une épaisseur de revêtement de 1 à 40 microns.

29. Procédé suivant la revendication 26, comprenant de plus le collage du substrat précité à au moins une couche d'une matière sensiblement non poreuse.

30. Procédé suivant la revendication 29, dans lequel ladite matière sensiblement non poreuse est choisie parmi les polymères thermoplastiques sensiblement non poreux, les polymères thermoplastiques métallisés sensiblement non poreux, les polymères thermodurcis sensiblement non poreux, les matières élastomères sensiblement non poreuses, les métaux sensiblement non poreux et leurs mélanges.

31. Procédé suivant la revendication 26, comprenant de plus l'étape de séchage du substrat enregistrable par jet d'encre revêtu par l'application d'une température allant de la température ambiante à 177°C (350°F).

32. Substrat microporeux revêtu comprenant :
a. un substrat microporeux comportant une surface supérieure et une surface inférieure comprenant :
(i) une polyoléfine;
(ii) une charge siliceuse;
(iii) une porosité telle que les pores constituent au moins 35 % en volume dudit substrat microporeux; et
b. un revêtement provenant d'une composition de revêtement suivant l'une quelconque des revendications 1 à 12, au moins partiellement appliqué à au moins une surface du substrat microporeux précité.

33. Article multicouche comprenant un substrat enregistrable par jet d'encre au moins partiellement relié à une matière sensiblement non poreuse, ledit substrat enregistrable par jet d'encre étant au moins partiellement revêtu d'une composition de revêtement refusant l'eau sensiblement suivant l'une quelconque des revendications 1 à 12.

34. Article multicouche suivant la revendication 33, comprenant de plus une composition de revêtement réduisant la friction dans lequel au moins l'un des substrat enregistrable par jet d'encre et matière sensiblement non poreuse précités est au moins partiellement revêtu de ladite composition de revêtement réduisant la friction.

35. Procédé de production d'un article multicouche comprenant les étapes de :
a. formation d'un substrat enregistrable par jet d'encre comportant une surface supérieure et une surface inférieure;
b. application au moins partielle d'une composition de revêtement suivant l'une quelconque des revendications 1 à 12, à au moins une surface dudit substrat enregistrable par jet d'encre;
c. liaison au moins partielle dudit substrat enregistrable par jet d'encre de (b) à une matière sensiblement non poreuse comportant une surface supérieure et une surface inférieure; et
d. application au moins partielle d'une composition de revêtement réduisant la friction à au moins une surface d'au moins l'un des substrat enregistrable par jet d'encre et matière sensiblement non poreuse précités.
